(19) Europäisches Patentamt / European Patent Office / Office européen des brevets

(11) **EP 4 235 526 A1**

(12) **EUROPEAN PATENT APPLICATION**
published in accordance with Art. 153(4) EPC

(43) Date of publication:
**30.08.2023 Bulletin 2023/35**

(21) Application number: **21897695.9**

(22) Date of filing: **09.11.2021**

(51) International Patent Classification (IPC):
**G06N 99/00** (2019.01)   **G06F 17/10** (2006.01)

(52) Cooperative Patent Classification (CPC):
**G06F 17/10; G06N 99/00**

(86) International application number:
**PCT/JP2021/041071**

(87) International publication number:
**WO 2022/113720 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.11.2020 JP 2020195206**

(71) Applicant: **Sony Group Corporation**
**Tokyo 108-0075 (JP)**

(72) Inventor: **IDE, Naoki**
**Tokyo 108-0075 (JP)**

(74) Representative: **D Young & Co LLP**
**120 Holborn**
**London EC1N 2DY (GB)**

(54) **INFORMATION PROCESSING DEVICE, INFORMATION PROCESSING METHOD, AND INFORMATION PROCESSING SYSTEM**

(57) An information processing apparatus according to the present disclosure includes at least two processors that extract, from first information input to a system, second information necessary for processing formulated as a combination optimization problem, receive an input of the extracted second information and calculate an objective function of the combination optimization problem, and receive an input of the objective function and output a solution of the combination optimization problem. One processor of the at least two processors is a processor that outputs the solution of the combination optimization problem.

FIG.17

**Description**

Field

The present disclosure relates to an information processing apparatus, an information processing method, and an information processing system.

Background

Quantum annealing has been known as a calculation method for accelerating combination optimization that is difficult to calculate. For example, there has been provided a method for realizing, at high speed, using the quantum annealing, maximum likelihood decoding of a block code known as one of combination optimization problems that are difficult to calculate (for example, Non Patent Literature 1).

Citation List

Non Patent Literature

Non Patent Literature 1: "Maximum Likelihood Channel Decoding with Quantum Annealing Machine" Naoki Ide, Tetsuya Asayama, Hiroshi Ueno, Masayuki Ohzeki <Internet> https://arxiv.org/abs/2007.08689 (Searched on November 9, 2020)

Summary

Technical Problem

For example, according to Non Patent Literature 1, the maximum likelihood decoding of the block code can be converted into a basis spin search problem of an Ising model handled by the quantum annealing. Therefore, according to Non Patent Literature 1, it is possible to, by using quantum annealing, speed up the maximum likelihood decoding that is difficult to calculate.

However, a currently available actual quantum annealing machine, that is, a quantum annealer is required to have an extremely low temperature environment as an operation environment. For this reason, a large-scale cooling system is required, and it is difficult to use the cooling system in, for example, a mobile terminal.

The reason why the current quantum annealer operates only at low temperatures is that the quantum annealer require a superconducting device to realize spinning of the Ising model. However, according to the method in Non Patent Literature 1, a spin basis state of the Ising model only has to be able to be realized at high speed, and it is not always necessary to use the quantum annealing that requires the superconducting device.

Therefore, the present disclosure proposes an information processing apparatus, an information processing method, and an information processing system that enable searching for a spin basis state of an Ising model without using quantum annealing.

Solution to Problem

According to the present disclosure, an information processing apparatus includes at least two processors that extract, from first information input to a system, second information necessary for processing formulated as a combination optimization problem, receive an input of the extracted second information and calculate an objective function of the combination optimization problem, and receive an input of the objective function and output a solution of the combination optimization problem, wherein one processor of the at least two processors is a processor that outputs the solution of the combination optimization problem.

Brief Description of Drawings

FIG. 1 is a flowchart illustrating an example of a procedure of information processing of the present disclosure.
FIG. 2 is a flowchart illustrating an example of a processing procedure for pseudo signal generation.
FIG. 3 is a flowchart illustrating an example of a processing procedure for pseudo parity check matrix generation.
FIG. 4 is a diagram illustrating a first example of decoding processing.

FIG. 5 is a diagram illustrating a second example of the decoding processing.

FIG. 6 is a diagram illustrating an example of a configuration of an information processing system.

FIG. 7 is a diagram illustrating a fifth embodiment to which information processing of the present disclosure is applied.

FIG. 8 is a diagram illustrating an example of a configuration of a receiver to which the information processing of the present disclosure is applied.

FIG. 9 is a diagram illustrating a sixth embodiment to which the information processing of the present disclosure is applied.

FIG. 10 is a diagram illustrating an example of a configuration to which the information processing of the present disclosure is applied.

FIG. 11 is a diagram illustrating a seventh example to which the information processing of the present disclosure is applied.

FIG. 12 is a diagram illustrating a configuration example of a quantum annealer.

FIG. 13 is a diagram illustrating an example of a user interface.

FIG. 14 is a diagram illustrating an example of a user interface.

FIG. 15 is a diagram illustrating an example of a user interface.

FIG. 16 is a diagram illustrating an example of a user interface.

FIG. 17 is a diagram illustrating a configuration example of an information processing apparatus of the present disclosure.

FIG. 18 is a hardware configuration diagram illustrating an example of a computer that implements functions of the information processing apparatus and the like.

Description of Embodiments

Embodiments of the present disclosure are explained in detail below with reference to the drawings. Note that an information processing apparatus, an information processing method, and an information processing system according to the present application are not limited by the embodiments. In each of the following embodiments, the same parts are denoted by the same reference numerals and signs to omit redundant description.

The present disclosure is explained according to order of items described below.

1. First Embodiment (mathematical explanation)

    1-1. Ising model
    1-2. Conversion of the Ising model into QUBO
    1-3. Solution in a decoding algorithm of the QUBO
    1-3-1. Conversion of the QUBO into a decoding problem
    1-3-2. Decoding algorithm
    1-3-2-1. Variable node processing
    1-3-2-2. Check node processing
    1-3-2-3. Output of a decoded bit
    1-3-3. Reduction in weight of pseudo decoding processing
    1-3-3-1. SIZE reduction using symmetry of the QUBO
    1-3-3-2. Modification of BP decoding processing

2. Second Embodiment

    2-1. Ising decoder
    2-1-1. Ising model-QUBO conversion
    2-1-2. QUBO-decoding problem conversion
    2-1-2-1. Pseudo signal generation
    2-1-2-2. Pseudo parity check matrix generation
    2-1-2-3. BP decoding
    2-1-2-4. BP Decoding of a first example 2-1-2-5. BP Decoding of a second example 2-1-2-6. Spin variable determination

3. Third Embodiment

    3-1. Main function
    3-2. Ising model-QUBO conversion

3-3. QUBO-Decoding problem conversion
3-4. BP Decoding of a first example
3-5. BP Decoding of a second example

4. Fourth Embodiment

4-1. Information processing system example
4-2. Application CPU
4-3. Combination optimization memory
4-4. Combination optimization processing CPU
4-5. Ising decoder
4-6. Decoding processing memory

5. Fifth Embodiment
6. Sixth Embodiment
7. Seventh Embodiment

7-1. Computer example
7-2. User interface

8. Configuration example of an information processing apparatus
9. Other configuration examples and the like

9-1-1. Modifications
9-1-2. Bit flip
9-2-1. Processor
9-2-2. Specific example of a multiprocessor
9-3. Others

10. Effects according to the present disclosure
11. Hardware configuration

[1. First Embodiment (mathematical explanation)]

First, before configurations and processing of apparatuses such as an information processing apparatus of the present disclosure are explained, a first embodiment for performing mathematical explanation according to the present disclosure is explained. In the following technical explanation, explanation of the related art is omitted as appropriate.

[1-1. Ising model]

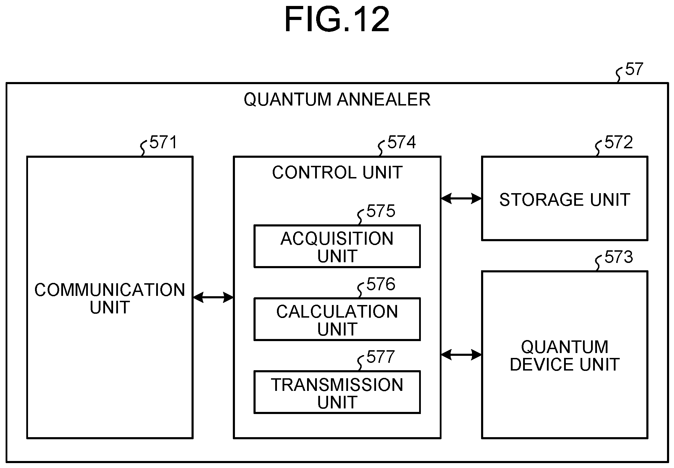

First, a quantum annealer that realizes quantum annealing as hardware is a computer that solves a combination optimization problem as a basis state search problem of an Ising model. Note that an example of an apparatus configuration of the quantum annealer is explained in detail with reference to FIG. 12 and the like.

The Ising model is a mathematical model for explaining phase transition of ferromagnetism using a principle of energy minimization. Although detailed explanation is omitted, the Ising model is a physical model proposed to model a phase transition phenomenon of a ferromagnetic material (magnet). Energy of the Ising model is generally represented by a function indicated by the following Formula (1).

$$H = -\sum_{i=1}^{N}\sum_{j=1}^{N} J_{ij} s_i s_j - \sum_{k=1}^{N} h_k s_k \qquad (1)$$

Here, a spin variable $s \square \{-1, 1\}^N$ of the Ising model is a binary variable. $J_{ij}$ is a coefficient representing binding energy and $h_k$ is a coefficient representing a local magnetic field. In the quantum annealing, an Ising model corresponding to a combination optimization problem is artificially configured and a solution of the combination optimization problem is obtained from a basis state of a spin of the Ising model.

However, an objective function of the combination optimization that can be handled here needs to be in the form of the function explained above (for example, Formula (1)). That is, an unknown variable is either -1 or 1 and the objective function is represented by a quadratic or lower term of the unknown variable.

If the objective function is in this form, that is, a form represented by the quadratic or lower term of the unknown variable, coefficients of primary and secondary terms can be extracted as coefficients of the Ising model. Then, when the coefficients of the obtained Ising model are input to the quantum annealer, the quantum annealer outputs an array of spin variables of the basis state of the corresponding Ising model. The solution of the spin variable can be used as a solution of the original combination optimization problem.

Although such a combination optimization problem by the objective function appears quite limited at first glance, in practice, many problems have already been able to be converted into forms of Ising models and have been applied to the forms of the Ising models. For example, examples of a problem that can be converted into a form of an Ising model include a traveling salesman problem and a coloring problem.

In order to effectively utilize resources such as the problem converted into the form of the Ising model as explained above, a method of solving a combination optimization problem applied to the form of the Ising model is provided instead of the quantum annealing.

First, as an example of the method, a case is explained in which a decoding algorithm of a binary code is used. In the following explanation, a method of solving a basis search of the Ising model with a binary code decoding algorithm is explained.

[1-2. Conversion of the Ising Model into QUBO]

Conversion of the Ising model into QUBO is explained below. QUBO is an abbreviation of Quadratic Unconstrained Binary Optimization. For example, the gist of the present disclosure is to solve a basis search problem of an Ising model corresponding to an original combination optimization problem with a decoding algorithm of a binary code.

To handle the decoding algorithm of the binary code, it is more convenient to use the QUBO that handles a binary variable as a starting point than using the Ising model that handles the spin variable. Therefore, first, the Ising model is converted into the QUBO. For example, the QUBO means obtaining a solution of a binary variable $z \square \{0, 1\}^N$ for minimizing an objective function shown in the following Formula (2).

$$L(z) = \sum_{i=1}^{N} \sum_{j=1}^{N} q_{ij} z_i z_j \qquad (2)$$

Here, the binary variable and the spin variable can be correlated as indicated by the following Formula (3).

$$s = 1 - 2z \qquad (3)$$

If a relation indicated by Formula (3) is used, an energy function of the Ising model can be equivalently converted into an objective function of the QUBO, for example, as indicated by the following Formula (4).

$$
\begin{aligned}
H &= -\sum_{i=1}^{N} \sum_{j=1}^{N} J_{ij} s_i s_j - \sum_{k=1}^{N} h_k s_k \\
&= -\sum_{i=1}^{N} \sum_{j=1}^{N} J_{ij}(1 - 2z_i)(1 - 2z_j) - \sum_{k=1}^{N} h_k(1 - 2z_k) \\
&= \sum_{i=1}^{N} \sum_{j=1}^{N} \left( -4J_{ij} + \delta_{ij} \left( \sum_{k=1}^{N} (4J_{ik}) + 2h_i \right) \right) z_i z_j \\
&\quad + const
\end{aligned}
\qquad (4)
$$

That is, the energy function of the Ising model can be converted into the objective function of the QUBO by conversion between coefficients as indicated by the following Formula (5).

$$q_{ij} = -4J_{ij} + \delta_{ij}\left(\sum_{k=1}^{N}(4J_{ik}) + 2h_i\right) \qquad (5)$$

In the present disclosure, the basis state search of the Ising model is realized by solving the QUBO having the coefficients converted from the coefficients of the Ising model. Note that the coefficient $q_{ij}$ of QUBO can be regarded as an ij component of a square matrix $Q=(q_{ij})$. Therefore, the objective function of the QUBO can be represented as indicated by the following Formula (6).

$$L(z) = z^T Q z \qquad (6)$$

The following Formula (7) also holds from the symmetry of the formula.

$$L(z) = \frac{1}{2}z^T(Q + Q^T)z \qquad (7)$$

That is, as the coefficient matrix of the QUBO, a matrix indicated by the following Formula (8) may be used.

$$\bar{Q} = \frac{1}{2}(Q + Q^T) \qquad (8)$$

Since the matrix indicated by the following Formula (8) is a symmetric matrix, the matrix is advantageous for reduction in calculation and the like. In the following example, it is assumed that, as the coefficient matrix of the QUBO, a coefficient matrix converted into a symmetric matrix is used.

[1-3. Solution in a decoding algorithm of the QUBO]

It is explained above that the basis search of the Ising model performed by the quantum annealing is equivalent to the QUBO. In the following explanation, a point of solving the QUBO with a binary code decoding algorithm is explained. For example, an object of the present disclosure is to realize a basis search of an Ising model with a decoding algorithm of a binary code. This can be rephrased as the QUBO realizing a binary code decoding algorithm.

The following processing is explained as processing for applying the QUBO to the binary code decoding algorithm (also referred to as "algorithm application processing"). First, in the algorithm application processing, the QUBO is converted into a problem of maximum likelihood decoding of a binary code. Then, in the algorithm application processing, the maximum likelihood decoding is approximately solved by, for example, a decoding algorithm (also referred to as "BP decoding") using a belief propagation method (also referred to as "BP").

[1-3-1. Conversion of the QUBO into a decoding problem]

First, a point of converting the QUBO into a binary code decoding problem is explained. the QUBO is converted into a binary code decoding problem, specifically, a maximum likelihood decoding problem. The binary code decoding problem is a problem of searching for a bit string for minimizing likelihood based on a signal string under a condition that a parity check matrix and the signal string are given.

For example, in "Maximum Likelihood Channel Decoding with Quantum Annealing Machine (Japanese translation: channel maximum likelihood decoding by quantum annealing): <https://arxiv.org/abs/2007.08689>" which is the related art of Non Patent Literature 1, it is a key to eliminate mod2 (modulo 2) that frequently appears in a code theory. On the other hand, in the following explanation, the QUBO is brought close to the decoding problem by taking an element of mod2 into the QUBO.

Specifically, a relation indicated by "$2z_iz_j=z_i+z_j-\text{mod2}(z_i+z_j)$" (also referred to as "relational expression") is used to produce the likelihood of a coding/decoding technique. This relational expression itself can be easily checked by listing four combinations of $z_i$ and $z_j$. Note that mod2(z) is generally written as z mod2 but, here, mod2(z) is written assuming that mod2(z) is a function.

When the objective function of the QUBO is transformed using this relational expression, the objective function can be converted into a form of a sum of square errors as indicated by the following Formula (9).

$$L(z) = \frac{1}{2}\sum_{i=1}^{N}\sum_{j=1}^{N} q_{ij}\left(z_i + z_j - \text{mod}2(z_i + z_j)\right)$$

$$= \frac{1}{2}\left(\sum_{i=1}^{N} 2p_i z_i - \sum_{i=1}^{N}\sum_{j=1}^{N} q_{ij}\text{mod}2(z_i + z_j)\right) \tag{9}$$

$$= \frac{1}{2}\left(\sum_{i=1}^{N}(r_i - z_i)^2 + \sum_{i=1}^{N}\sum_{j=1}^{N}\left(r_{ij} - \text{mod}2(z_i + z_j)\right)^2\right)$$

$$+ const$$

However, here, the objective function is converted into the following Formulas (10), (11), and (12) using $q_{ij}=q_{ji}$.

$$p_i = \sum_{j=1}^{N} q_{ij} \tag{10}$$

$$r_i = \frac{1}{2}(1 - 2p_i) \tag{11}$$

$$r_{ij} = \frac{1}{2}(1 + q_{ij}) \tag{12}$$

Here, an N-dimensional vector formed by arranging $r_i$ (i=1... N) is referred to as first pseudo signal string $r_1$ and an $M=N^2$ dimensional vector formed by arranging $r_{ij}$ (i, j=1... N) is referred to as second pseudo signal string $r_2$. Further, a vector obtained by arranging these two pseudo signal strings is simply referred to as pseudo signal string r.

$$r_1 = [r_1, r_2 \dots r_N]^T \tag{13}$$

$$r_2 = [r_{11}, r_{12} \dots r_{NN}]^T \tag{14}$$

$$r = [r_1^T, r_2^T]^T \tag{15}$$

Here, an auxiliary variable is introduced as $z_{ij}=\text{mod}2 (z_i+z_j)$ anew such that a sum of square errors for the two introduced pseudo signal strings is expressed in an equivalent format. At this time, the auxiliary variable $z_{ij}$ is also a binary variable that takes only one of 0 and 1. As a result, the objective function is transformed into a form of a sum of square errors as indicated by the following Formula (16).

$$L(z) = \frac{1}{2}\left(\sum_{i=1}^{N}(r_i - z_i)^2 + \sum_{i=1}^{N}\sum_{j=1}^{N}(r_{ij} - z_{ij})^2\right) + const. \tag{16}$$

According to the description of Formula (16), in the objective function, elements of the first pseudo signal string and the second pseudo signal string are respectively expressed by square errors from elements of a first code string and a second code string. Here, an N-dimensional vector formed by arranging binary variables $z_i$ (i=1... N) desired to be optimized is referred to as first code string and an $M=N^2$ dimensional vector formed by arranging the auxiliary variables $z_{ij}$ (i, j=1... N) is referred to as second code string. For example, the following Formula (17) indicates the first code string and Formula (18) indicates the second code string.

$$x_1 = [z_1, z_2 \dots z_N]^T \tag{17}$$

$$x_2 = [z_{11}, z_{12} \dots z_{NN}]^T \tag{18}$$

Further, a vector obtained by arranging these two code strings (the first code string and the second code string) is simply referred to as code string. The following Formula (19) indicates the code string.

$$x = [x_1^T, x_2^T]^T \tag{19}$$

This minimization of the objective function is in a form of a least squares method. In other words, this is equivalent to the maximum likelihood decoding (in the case in which noise of a communication path is constant). However, in this objective function, when $z_{ij}$ and $z_i$, $z_j$ are independently optimized, a solution that does not satisfy constraint of $z_{ij}$=mod2($z_i$ + $z_j$) is sometimes selected. Therefore, in order to take in action satisfying the constraint, for example, as indicated by Formula (20), a penalty term "mod2 ($z_i$+$z_j$+$z_{ij}$) " is added to the original objective function L(z). It can be easily confirmed by checking four combinations of $z_i$, $z_j$ that this penalty term is 0 when the constraint $z_{ij}$=mod2($z_i$+$z_j$) is satisfied and is 1 otherwise, that is, minimal when the constraint is satisfied.

$$L_\lambda(z) = L(z) + \lambda \sum_{i=1}^{N} \sum_{j=1}^{N} \text{mod2}\big(z_i + z_j + z_{ij}\big) \tag{20}$$

The parameter $\lambda$ in Formula (20) is set to, for example, a value larger than 1 in order to prioritize satisfaction of the constraint.
Here, mod2 ($z_i$+$z_j$+$z_{ij}$) is expressed by a parity check matrix, which often appears in a code. Assuming that $M=N^2$, K=N+M, a binary matrix H of M×K is configured as a sparse matrix in which the i, j column and the N+Ni+j column of the Ni+j-th row are 1 and the others are 0. For example, when N=3, the sparse matrix is a matrix as indicated by the following Formula (21).

$$H_3 = \begin{pmatrix} 1 & 0 & 0 & 1 & 0 & 0 & 0 & 0 & 0 & 0 & 0 & 0 \\ 1 & 1 & 0 & 0 & 1 & 0 & 0 & 0 & 0 & 0 & 0 & 0 \\ 1 & 0 & 1 & 0 & 0 & 1 & 0 & 0 & 0 & 0 & 0 & 0 \\ 0 & 1 & 0 & 0 & 0 & 0 & 1 & 0 & 0 & 0 & 0 & 0 \\ 0 & 1 & 1 & 0 & 0 & 0 & 0 & 1 & 0 & 0 & 0 & 0 \\ 1 & 1 & 0 & 0 & 0 & 0 & 0 & 0 & 1 & 0 & 0 & 0 \\ 0 & 0 & 1 & 0 & 0 & 0 & 0 & 0 & 0 & 1 & 0 & 0 \\ 0 & 1 & 1 & 0 & 0 & 0 & 0 & 0 & 0 & 0 & 1 & 0 \\ 1 & 0 & 1 & 0 & 0 & 0 & 0 & 0 & 0 & 0 & 0 & 1 \end{pmatrix} \tag{21}$$

This binary matrix is configured by an M×N first binary sparse matrix and an M×$N_2$ second binary sparse matrix (in other words, a unit matrix). Here, the M×K binary sparse matrix H is referred to as pseudo parity check matrix. Using the pseudo signal string and the pseudo parity check matrix explained above, the objective function of the QUBO can be expressed as indicated by the following Formula (22).

$$L_\lambda(x) = \sum_{i=1}^{K}(r_i - x_i)^2 + \lambda \sum_{i=1}^{M} \text{mod}2\left(\sum_{j=1}^{K} h_{ij}x_j\right) \qquad (22)$$

This objective function minimization problem can be expressed as indicated by the following Formula (23) when λ is sufficiently large.

$$\text{minimize } \|r - x\|_2^2 \text{ subject to } \text{mod}2(Hx) = 0 \qquad (23)$$

That is, this is parity-constrained maximum likelihood decoding. As explained above, the decoding problem of the code is a parity-constrained maximum likelihood decoding problem using the parity check matrix. The parity check matrix may be configured from coefficients of the objective function or may be read from a predetermined storage device such as a database. Here, since the parity check matrix H is a sparse matrix, x corresponding to a codeword may be regarded as a codeword of a low density parity-check code (LDPC) in which a sparse parity check matrix is used. Therefore, the solution x of the maximum likelihood decoding is approximately obtained by applying the BP decoding algorithm of the LDPC. For example, decoding processing by the belief propagation method is decoding processing for a low density parity-check code. Leading N bits of the obtained solution x are the binary variable z. Therefore, this (that is, the leading N bits of the obtained solution x) is regarded as an optimal solution z* of the QUBO. Note that, since this solution is a binary variable, the binary variable is converted as indicated by the following Formula (24) to be a spin variable in the basis state of the Ising model.

$$s^* = 1 - 2z^* \qquad (24)$$

[1-3-2. Decoding algorithm]

In the following explanation, a decoding algorithm by the belief propagation (BP) method (also referred to as "BP decoding algorithm") is explained as an example. In general, maximum likelihood decoding (for example, maximum likelihood decoding of a block code) is known as a decoding method that, particularly when a code length is long, causes combination explosion and is difficult to realize in a practical time. On the other hand, it is known that the BP decoding approaches the performance of the maximum likelihood decoding while performing decoding in a practical time as a code length becomes longer (for example, 1000 bits or more). That is, when the number of variables is relatively large, by replacing the maximum likelihood decoding with the BP decoding, performance equivalent to the maximum likelihood decoding can be obtained in the practical time.

However, it is necessary that the structure of the parity check matrix satisfies certain conditions. For example, it is necessary that the structure of the parity check matrix satisfies the following two conditions. A first condition is that the parity check matrix is a sparse matrix. For example, the first condition is that the number of non-zero components is ten or less in each row and each column of the parity check matrix.

A second condition is that there is no short loop in a factor graph. For example, the second condition is that there is no loop of length 4 or 5 in the factor graph.

Since the BP decoding algorithm is introduced in various documents and is a known technique, detailed explanation thereof is omitted. The BP decoding algorithm is only briefly explained. In the following explanation, a processing process of an algorithm called log-domain sum product method is explained.

The algorithm explained below is, for example, an algorithm for performing procedures #1- to #1-6 explained below.

- Procedure #1-1. Input a reception signal r, estimated noise intensity σ, and the parity check matrix H
- Procedure #1-2. Initialize messages α and β
- Procedure #1-3. Execute variable node processing: (H, r, σ, β) → α
- Procedure #1-4. Execute check node processing: (H, α) → β
- Procedure # 1-5. Repeat the procedure #1-3 to the procedure #1-4 until the procedure #1-3 to the procedure #1-4 converge or reach a specified number of times
- Procedure #1-6. Output a bit string m: (H, r, σ, α) → m

[1-3-2-1. Variable node processing]

Respective kinds of processing concerning the procedure #1-1 to the procedure #1-6 are explained below. First, variable node processing is explained. The variable node processing plays a role of embedding information obtained from a signal in a message. In the log-domain sum product method, first, the reception signal r is converted into a log-odds λ and treated. Odds indicate a ratio of probabilities (posterior probabilities) concerning whether noise of a code 0 is added to a reception signal or noise is added to a code 1. At this time, assuming that the noise is Gaussian noise with the standard deviation σ, the log-odds are calculated as indicated by the following Formula (25).

$$\lambda_j = \log\frac{p(0|r_j)}{p(1|r_j)} = \frac{2r_j}{\sigma^2} \tag{25}$$

When the intensity of the noise is unknown, for example, a value around 1 may be set as the log-odds. The variable node processing updates the message α based on the following Formulas (26) and (27).

$$\alpha_{ij} = 2\tanh^{-1}\left(\frac{\delta_i}{\beta_{ij}}\right) \tag{26}$$

$$\gamma_j = \lambda_j + \sum_i h_{ij}\alpha_{ij} \tag{27}$$

Note that $\delta_i$ is an initial value 0. Note that, in a normal logarithmic domain algorithm, β is input and α is output but, in the present disclosure, β and δ are input and α and γ are output for convenience of implementation.

[1-3-2-2. Check node processing]

Subsequently, check node processing is explained. The check node processing plays a role of embedding a condition of parity constraint in a message. The check node processing updates the message β based on the following Formulas (28) and (29).

$$\beta_{ji} = \gamma_j - \alpha_{ij} \tag{28}$$

$$\delta_i = \prod_j \left(1 - h_{ij} + h_{ij}\tanh\left(\frac{1}{2}\beta_{ji}\right)\right) \tag{29}$$

Note that, as in the variable node processing, in the present disclosure, α and γ are input and β and δ are output for convenience of implementation.

[1-3-2-3. Output of a decoded bit]

Subsequently, an output of a decoded bit is explained. The output of the decoded bit is performed after the processing explained above is repeated an appropriate number of times. If the processing explained above is repeated the appropriate number of times, log-odds $\gamma_j$ considering both a signal and parity constraint are calculated.
Log-odds excluding a parity portion take positive or negative values. The positive value corresponds to an original sign bit 0 and the negative value corresponds to 1. In the processing explained above, a memory and the number of times of calculation may be reduced using the sparsity of the parity check matrix. For example, as in a sparse matrix operation, by storing only an index and a value of a non-zero element in the memory and multiplying and adding only the non-zero element, the memory and the number of times of calculation can be reduced.

[1-3-3. Weight reduction of the pseudo decoding processing]

In the method explained above, as the number of binary variables increases, the size of the pseudo signal string increases in proportion to the square of the number and the size of the pseudo parity check matrix increases in proportion to the fourth power of the number.

Therefore, the sizes of the pseudo signal and the pseudo parity check matrix are reduced by some devices. Here, the weight of the decoding processing is reduced by the following devices #1 and #2.

- Devise #1. Size reduction using symmetry of the QUBO
- Devise # 2. Modification of the BP decoding processing using a specific structure of the pseudo parity check matrix

[1-3-3-1. Size reduction using symmetry of the QUBO]

First, size reduction using symmetry of the QUBO is explained. If the objective function of the QUBO is checked again, even if the order of products of the binary variables is replaced, the objective function is unchanged. Therefore, even if a transposed matrix of the coefficient matrix is used for the coefficient matrix, the solution does not change. Furthermore, the solution does not change even if the objective function is transformed as indicated by the following Formula (30).

$$L(z) = \sum_{i=1}^{N} \sum_{j=1}^{N} \frac{1}{2}(q_{ij} + q_{ji})z_i z_j \tag{30}$$

Therefore, a coefficient matrix indicated by the following Formula (31) is introduced as a new coefficient matrix.

$$q_{ij} \leftarrow \frac{1}{2}(q_{ij} + q_{ji}) \tag{31}$$

Since this coefficient matrix is a symmetric matrix, an objective function indicated by the following Formula (32) in which the number of times of multiplication and addition is reduced is obtained. However, here, following Expression (20), $z_{ij}$ is introduced as a variable desired to satisfy $z_{ij}=\text{mod}2(z_i+z_j)$ and a penalty term in the case in which this constraint is not satisfied is represented by a second term.

$$
\begin{aligned}
L(z) &= \frac{1}{2}\sum_{i=1}^{N}\sum_{j=1}^{N} q_{ij}(z_i + z_j - z_{ij}) + \frac{\lambda}{2}\sum_{i=1}^{N}\sum_{j=1}^{N}\text{mod}2(z_i + z_j + z_{ij}) \\
&= \sum_{i=1}^{N} p_i z_i - \sum_{i=1}^{N}\sum_{j=1}^{i-1} q_{ij} z_{ij} + \lambda \sum_{i=1}^{N}\sum_{j=1}^{i-1}\text{mod}2(z_i + z_j + z_{ij}) \\
&= \sum_{i=1}^{N} (r_i - z_i)^2 + \sum_{i=1}^{N}\sum_{j=1}^{i-1}(r_{ij} - z_{ij})^2 + \lambda \sum_{i=1}^{N}\sum_{j=1}^{i-1}\text{mod}2(z_i + z_j + z_{ij}) \\
&\quad + const
\end{aligned} \tag{32}
$$

However, in formula modification in a second row, $z_{ii}=\text{mod}2(z_i+z_i) =0$ is used. Here, the following Formulas (33), (34), and (35) are used.

$$p_i = \sum_{j=1}^{N} q_{ij} \tag{33}$$

$$r_i = \frac{1}{2}(1 - 2p_i) \qquad (34)$$

$$r_{ij} = \frac{1}{2}(1 + 2q_{ij}) \qquad (35)$$

A pseudo signal string and a pseudo parity check matrix that use the symmetry of the coefficient matrix of the QUBO are vectors or matrices obtained by skipping some rows and columns from the original pseudo parity check matrix that does not use the symmetry.

First, since an Ni+1-th row of the original pseudo parity check matrix is a row corresponding to a diagonal component of the coefficient matrix Q, the Ni+1-th row is not a quadratic term and, therefore, may be omitted. Similarly, the N+Ni+1-th column may also be omitted.

Subsequently, one of (for example, smaller one) of an Ni+j-th row and an Nj+i-th row may be omitted from the symmetry of the coefficient matrix Q. In this case, one of the N+Ni+j-th column and the N+Nj+i-th column corresponding thereto is omitted and, for r and x, a row of the N+Ni+j-th row and the N+Nj+i-th row corresponding thereto is also omitted. Similarly, it is assumed that an index of the column skipped here is also skipped in the pseudo signal string.

As explained above, it can be seen that a matrix $H_3$ of 9 rows and 12 columns may be a matrix of 3 rows and 6 columns indicated by the following Formula (36).

$$\widetilde{H_3} = \begin{pmatrix} 1 & 1 & 0 & & 1 & & 0 & 0 \\ 0 & 1 & 1 & & 0 & & 1 & 0 \\ 1 & 0 & 1 & & 0 & & 0 & 1 \end{pmatrix} \qquad (36)$$

For example, even in the case of the general matrix, the number of rows and the number of columns are reduced as indicated by the following Formulas (37) and (38) .

$$M: N^2 \rightarrow \frac{1}{2}N(N - 1) \qquad (37)$$

$$K: N + N^2 \rightarrow \frac{1}{2}N(N + 1) \qquad (38)$$

Consequently, it can be seen that the size can be reduced to 1/4 or less of the original size. Further, for i and j where $q_{ij}$=0, the Ni+j row may be omitted. Similarly, the N+Ni+j-th column may be omitted but, in this case, the N+Ni+j-th rows of r and x are also omitted.

[1-3-3-2. Modification of the BP decoding processing]

Subsequently, a modification of the BP decoding processing using the specific structure of the pseudo parity check matrix is explained. As explained above, the pseudo parity check matrix is a matrix in which the first binary matrix corresponding to the first bit string and the second binary matrix corresponding to the second bit string are connected in the row direction. The second binary matrix is a dominant portion of a matrix size but is a unit matrix here.

By using this, it is possible to reduce the memory and increase the speed of the BP decoding processing. Here, for all variables having K=N+M dimensions, subscripts (1) and (2) (superscript characters (1) and (2)) are assigned separately to N and M parts and processing thereof (hereinafter also referred to as "deformation processing") is explained. Note that, since the deformation processing is a modification of the decoding algorithm explained above, explanation of the same points is omitted as appropriate.

The algorithm of the deformation processing is, for example, an algorithm that performs the following procedures #2-1 to #2-6.

- Procedure #2-1. Input the reception signal r, the noise parameter $\sigma$, and a core $H_c$ of the parity check matrix H
- Procedure #2-2. Execute the variable node processing: $(H,r,\sigma,\alpha^{(1)},\alpha^{(2)}) \to \beta^{(1)},\beta^{(2)}$
- Procedure #2-3. Execute the check node processing: $(H,\beta^{(1)},\beta^{(2)}) \to \alpha^{(1)},\alpha^{(2)}$
- Procedure #2-4. Repeat the procedure #2-2 to the procedure #2-3 until designated conditions are satisfied and output a bit string m: $(H,r,\sigma,\alpha) \to m$

The variable node processing of the deformation processing is performed using, for example, the following Formulas (39) and (40).

$$\beta_{ji}^{(1)} = \gamma_j^{(1)} - \alpha_{ij}^{(1)} \leftarrow \gamma_j^{(1)} = \frac{\left(2r_j^{(1)}\right)}{\sigma^2} + \sum_{i=1}^{M} h_{ij}^{(1)} \alpha_{ij}^{(1)} \tag{39}$$

$$\beta_j^{(2)} = \gamma_j^{(2)} - \alpha_j^{(2)} \leftarrow \gamma_j^{(2)} = \frac{\left(2r_j^{(2)}\right)}{\sigma^2} + \alpha_j^{(2)} \tag{40}$$

The check node processing of the deformation processing is performed using, for example, the following Formula (41).

$$\alpha_{ij}^{(1)} = 2\tanh^{-1}\left(\frac{\delta_i}{\beta_{ij}^{(1)}}\right), \alpha_i^{(2)} = 2\tanh^{-1}\left(\frac{\delta_i}{\beta_i^{(2)}}\right)$$

$$\leftarrow \delta_i = \tanh\left(\frac{1}{2}\beta_i^{(2)}\right) \prod_{j=1}^{N}\left(1 - h_{ij}\right. \tag{41}$$

$$\left. + h_{ij}\tanh\left(\frac{1}{2}\beta_{ji}^{(1)}\right)\right)$$

[2. Second Embodiment]

Subsequently, an example of processing concerning the present disclosure and a module configuration for performing the processing are explained as a second embodiment.

[2-1. Ising decoder]

An Ising decoder is explained as an example of an apparatus that performs processing concerning the present disclosure. The Ising decoder is a computer that receives, as an input, a coefficient matrix of an Ising model and outputs a solution of a spin variable in a basis state. For example, the Ising decoder may be an information processing apparatus 100 explained below. In the following explanation, processing for inputting the coefficient matrix of the Ising model and outputting the solution of the spin variable in the basis state is sometimes referred to as Ising decode processing.

The Ising decoder executes processing of Ising model to QUBO conversion (hereinafter also referred to as "Ising model-QUBO conversion"), a QUBO to decoding problem conversion unit (hereinafter also referred to as "QUBO-decoding problem conversion"), BP decoding, and variable conversion. For example, the Ising decoder includes an Ising model-QUBO conversion unit that performs Ising model QUBO conversion, a QUBO-decoding problem conversion unit that performs QUBO-decoding problem conversion, a BP decoding unit that performs BP decoding, and a variable conversion unit that performs variable conversion. Note that a module configuration (a block configuration) explained above is merely an example. A module configuration of the Ising decoder may be any configuration.

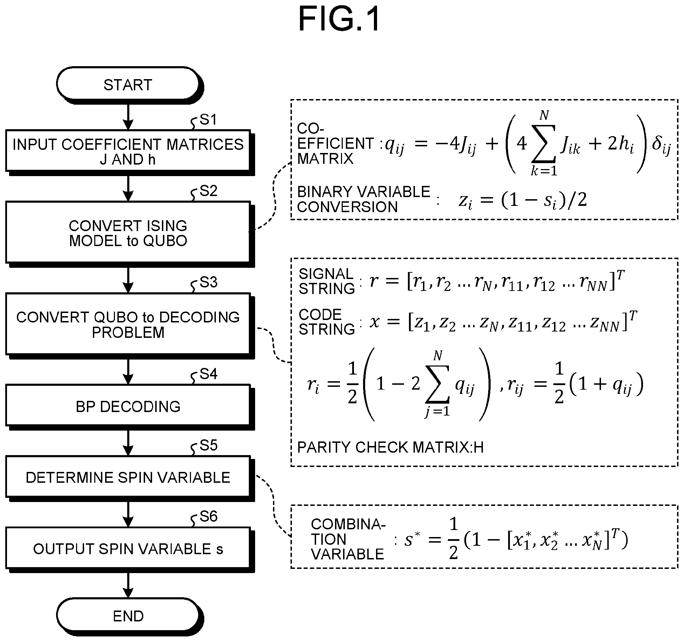

A flow of information processing according to the present disclosure is explained with reference to FIG. 1. FIG. 1 is a flowchart illustrating an example of a procedure of information processing of the present disclosure. In the following explanation, a case in which the Ising decoder performs various kinds of processing illustrated in FIG. 1 is explained as an example. Note that the respective kinds of processing explained below are not limited to the order of step numbers and may be performed in any order if the processing can be performed. First, an overview of the entire processing is explained with reference to FIG. 1 and, thereafter, details of the respective kinds of processing is explained.

As illustrated in FIG. 1, the Ising decoder receives an input of coefficient matrices J and h (step S1). For example, the coefficient matrix of the Ising model is input to the Ising decoder.

Then, the Ising decoder performs Ising model-QUBO conversion (step S2). For example, the Ising decoder executes processing for converting the Ising model into a QUBO format with processing concerning the coefficient matrix and the binary variable conversion. That is, the Ising model-QUBO conversion is processing for converting a coefficient of an energy function of the Ising model into a coefficient of an objective function of the QUBO format.

Then, the Ising decoder performs QUBO-decoding problem conversion (step S3). For example, the Ising decoder executes processing for converting the QUBO format into ae format of a decoding problem using information concerning a signal string, the code string, a parity check matrix, and the like. That is, the QUBO-decoding problem conversion is processing of converting, based on the objective function of the QUBO format, a signal string into an input signal string of a decoding problem of a code equivalent to a combination optimization problem.

Then, the Ising decoder performs BP decoding (step S4). For example, the Ising decoder performs the BP decoding, which is a decoding algorithm using the belief propagation method. Then, the Ising decoder determines a spin variable (step S5). For example, the Ising decoder determines the spin variable using information concerning a combination variable. That is, the BP decoding is processing for processing a decoding problem based on an input signal string, acquiring a code string, converting the code string into a solution of a combination optimization problem, and outputting the solution. For example, the BP decoding is configured by a decoding algorithm by the belief propagation method and decodes a code string from the input signal string and the parity check matrix based on the decoding processing by the belief propagation method. Details of the BP decoding are explained below.

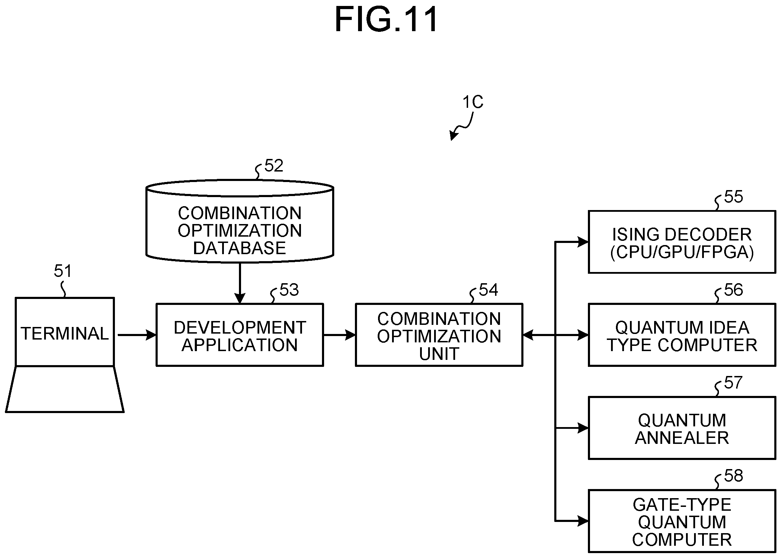

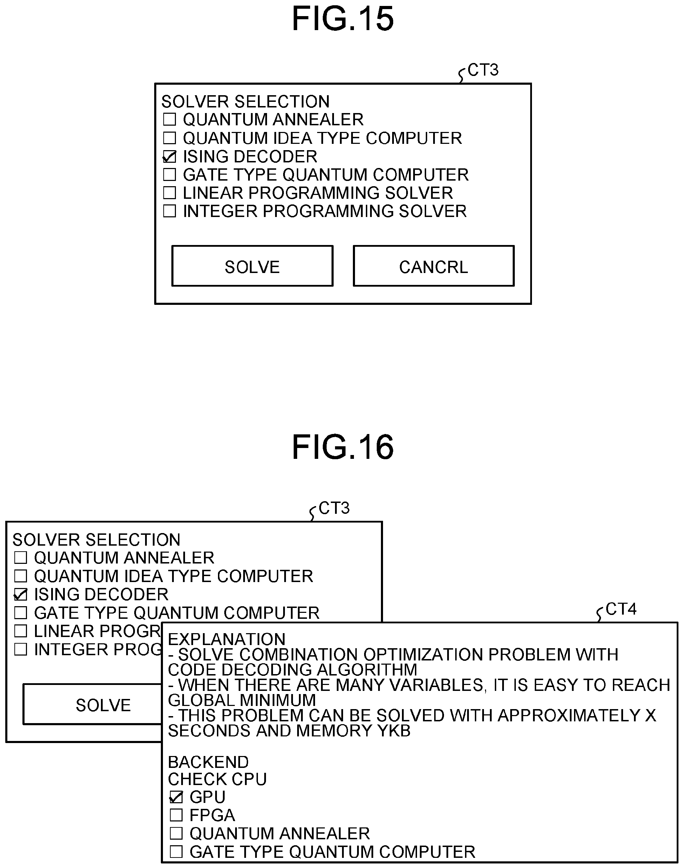

Then, the Ising decoder outputs a spin variable s (step S6). As an example of an output mode, for example, the Ising decoder may transmit information indicating the spin variable s to another apparatus (for example, a terminal 51 or the like in FIG. 11) or may display the information indicating the spin variable s on a screen (for example, a display unit 150 or the like in FIG. 15). Note that the output mode explained above is merely an example and the output may be generation of a processing result. In the following explanation, details of the respective kinds of processing of the processing illustrated in FIG. 1 are explained.

[2-1-1. Ising model-QUBO conversion]

By the Ising model-QUBO conversion, the coefficient matrices J and h of the Ising model are input and the coefficient matrix Q of the QUBO is output. If an ij-th component is written as a formula, the ij-th component is expressed as indicated by the following Formula (42).

$$q_{ij} \; \leftarrow 4\big(\delta_{ij} - 1\big)J_{ij} + 2h_i\delta_{ij} \qquad (42)$$

Here, conversion $Q \leftarrow (Q + {}^tQ)/2$ for making a matrix symmetry is applied and the ij-th component is expressed as indicated by the following Formula (43).

$$q_{ij} \leftarrow \frac{1}{2}\big(q_{ij} + q_{ji}\big) \qquad (43)$$

[2-1-2. QUBO-decoding problem conversion]

By the QUBO-decoding problem conversion, the coefficient matrix of the QUBO is input and the pseudo signal string r and the parity check matrix H are output. The QUBO-decoding problem conversion includes processing of pseudo signal generation and pseudo parity check matrix generation. In this case, for example, the QUBO-decoding problem conversion unit includes a pseudo signal generation unit and a pseudo parity check matrix generation unit.

[2-1-2-1. Pseudo signal generation]

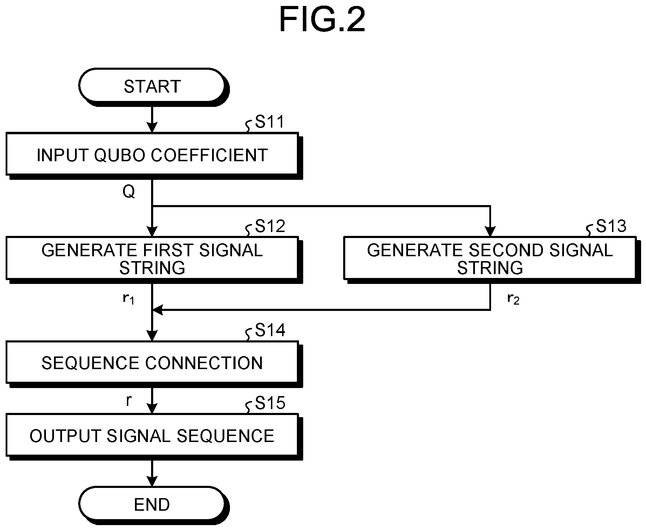

By the pseudo signal generation, the QUBO coefficient matrix is input and the pseudo signal string is output. The pseudo signal generation includes processing of first signal string generation, second signal string generation, and signal sequence connection. In this case, for example, the pseudo signal generation unit is configured by a first signal string generation unit, a second signal string generation unit, and a signal sequence connection. First, an overview of the pseudo signal generation is explained with reference to FIG. 2 and, thereafter, details of the respective kinds of processing are explained. FIG. 2 is a flowchart illustrating an example of a processing procedure of the pseudo signal generation. In the following explanation, a case in which the pseudo signal generation unit of the Ising decoder performs various kinds of processing illustrated in FIG. 2 is explained as an example.

As illustrated in FIG. 2, the pseudo signal generation unit of the Ising decoder receives an input of the QUBO coefficient matrix Q (step S11). For example, a coefficient matrix of the QUBO is input to the pseudo signal generation unit.

Then, the pseudo signal generation unit performs the first signal string generation (step S12). The pseudo signal generation unit performs the second signal string generation (step S13). Then, the pseudo signal generation unit performs the sequence connection (step S14). Then, the pseudo signal generation unit outputs a signal sequence (step S15). In the following explanation, details of the respective kinds of processing of the processing illustrated in FIG. 2 are explained.

- First signal string generation (First signal string generation block)

By the first signal string generation, the QUBO coefficient matrix Q is input and the first signal string $r_1$ is output. Here, the first signal string $r_1$ is a vector having length N. If an i-th component of the first signal string is written as a formula, the i-th component is expressed as indicated by the following Formula (44).

$$ r_i = \frac{1}{2}\left( 1 - 2\sum_{j=1}^{N} q_{ij} \right) \tag{44} $$

- Second signal string generation (second signal string generation block)

A second signal string generation block is a block that receives an input of the QUBO coefficient matrix Q and outputs the second signal string $r_2$ with the second signal string generation. Here, the second signal string is a vector having length $M=N^2$. If a (i, j)-th component of the second signal string is written as a formula, the (i, j)-th component is expressed as indicated by the following Formula (45).

$$ r_{ij} = \frac{1}{2}\left( 1 - q_{ij} \right) \tag{45} $$

Alternatively, the second signal string may be a vector having length M=1/2N(N-1). If a (i, j)-th, j<i component of the second signal string in this case is written as a formula, the (i, j)-th, j<i component is expressed as indicated by the following Formula (46).

$$ r_{ij} = \frac{1}{2}\left( 1 - 2q_{ij} \right) \tag{46} $$

Alternatively, the second signal string may be a vector of the half of the number of off-diagonal non-zero components of Q.

- Signal sequence connection (Signal sequence connection block)

The first signal sequence $r_1$ and the second signal sequence $r_2$ are connected by the signal sequence connection and the pseudo signal string r is generated. In this way, the first signal sequence $r_1$ and the second signal sequence $r_2$ are connected to form the pseudo signal string r.

[2-1-2-2. Pseudo parity check matrix generation]

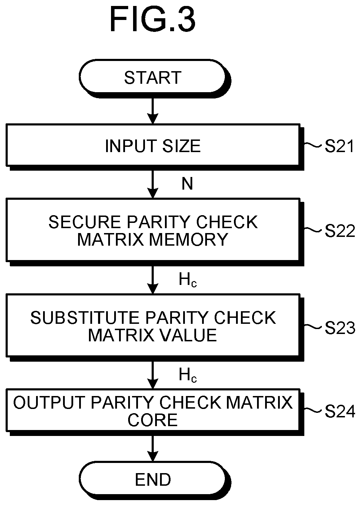

By the pseudo parity check matrix generation, the QUBO coefficient matrix is input and the pseudo parity check matrix is output. The pseudo parity check matrix is configured by securing an array memory and substituting values. An overview of the pseudo parity check matrix generation is explained below with reference to FIG. 3. FIG. 3 is a flowchart illustrating an example of a processing procedure of the pseudo parity check matrix generation. In the following explanation, a case in which the pseudo parity check matrix generation unit of the Ising decoder performs the various kinds of processing illustrated in FIG. 3 is explained as an example.

As illustrated in FIG. 3, the pseudo parity check matrix generation of the Ising decoder receives an input of the size N (step S21). For example, the coefficient matrix of the QUBO is input to the pseudo parity check matrix generation. Then, the pseudo parity check matrix generation secures a memory of the parity check matrix (step S22). The pseudo parity check matrix generation performs numerical value substitution in the parity check matrix (step S23). Then, the pseudo parity check matrix generation performs a core output of the parity check matrix (step S24).

An example of an algorithm for generating the pseudo parity check matrix is explained below. For example, the pseudo parity check matrix is an algorithm for performing the following procedures #3-1 to #3-5.

- Procedure #3-1. Input the coefficient matrix Q of the QUBO
- Procedure # 3-2. Calculate the number 2M of the off-diagonal non-zero components of Q
- Procedure #3-3. Initialize a matrix Hc with an $M \times N$ zero matrix
- Procedure #3-4. Initialize a loop variable k to 0 and execute the following loop #3-4

```
(Loop #3-4)
for i = 1 to N
for j = 1 to i - 1
if Q[i] [j] != 0:
Hc[k] [i] = 1
Hc[k] [j] = 1
k = k + 1
```

- Procedure #3-5. Output the pseudo parity check matrix H=[Hc, I(M)]

[2-1-2-3. BP decoding]

By the BP decoding, the pseudo signal string r and the pseudo parity check matrix H are input and the pseudo decoding bit string z is output. Here, an algorithm by the belief propagation method (BP) is used for decoding. Note that, although the word "decoding" is used here, encoding processing corresponding to the processing called decoding may be absent. In the following explanation, two examples of the BP decoding are respectively explained with reference to the drawings.

[2-1-2-4. BP decoding of first example]

First, a first example is explained. In the first example, the BP decoding executes log-odds calculation, the variable node processing, the check node processing, and bit string extraction processing. For example, the BP decoding unit includes a log-odds calculation unit that performs the log-odds calculation, a variable node processing unit that performs the variable node processing, a check node processing unit that performs the check node processing, and a bit string extraction unit that performs bit string extraction. Note that the block configuration explained above is merely an example and a block configuration of the BP decoding may be any configuration.

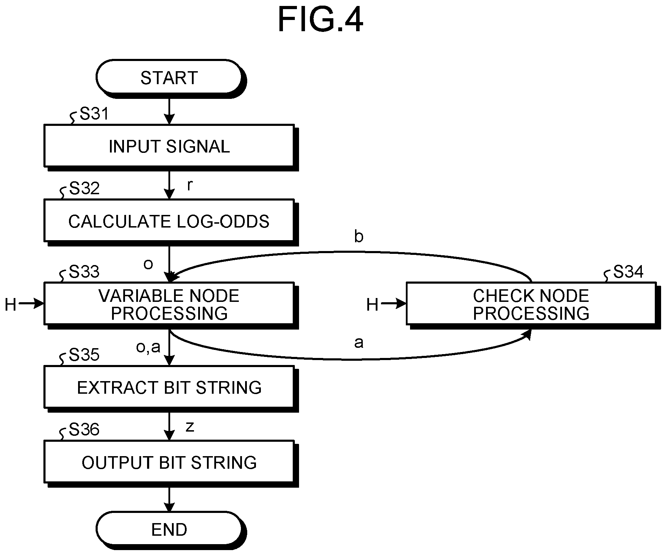

A flow of the BP decoding of the first example is explained with reference to FIG. 4. FIG. 4 is a diagram illustrating a first example of the decoding processing. In the following explanation, a case in which the BP decoding unit of the Ising decoder performs the various kinds of processing illustrated in FIG. 4 is explained as an example.

As illustrated in FIG. 4, the BP decoding unit of the Ising decoder receives an input of a signal (step S31). For example, the reception signal r and the parity check matrix H are input to the BP decoding unit.

Then, the BP decoding unit performs the log-odds calculation (step S32). For example, the BP decoding unit performs the log-odds calculation by calculating code odds based on a noise model. For example, the BP decoding unit calculates log-odds o from the reception signal r.

Then, the BP decoding unit performs the variable node processing (step S33). For example, the BP decoding unit performs the variable node processing by calculating belief a. For example, the BP decoding unit performs the variable node processing by calculating the belief a from the parity check matrix H, the log-odds o, and belief b.

The BP decoding unit performs the check node processing (step S34). For example, the BP decoding unit performs the check node processing by calculating the belief b. For example, the BP decoding unit performs the check node processing by calculating the belief b from the parity check matrix H and the belief a. The BP decoding unit repeatedly performs step S33 and step S34.

Then, the BP decoding unit performs the bit string extraction (step S35). For example, the BP decoding unit performs the bit string extraction by calculating the bit string z from the log-odds o and the belief a. In the first example, the bit string is acquired by inputting the pseudo signal and the pseudo parity check matrix using the configuration of the BP decoding as it is.

An example of an algorithm for performing the BP decoding of the first example is explained below. For example, the BP decoding of the first example has an algorithm for performing the following procedure #4-1 to #4-6.

- Procedure #4-1. Input the reception signal r and the parity check matrix H
- Procedure #4-2. Log-odds o calculation from the reception signal r
- Procedure #4-3. Initialize forward backward beliefs a and b
- Procedure #4-4. Variable node processing: (H, o, b) ->a
- Procedure #4-5. Check node processing: (H, a)->b
- Procedure #4-6. Designated condition repetition and bit string z output: (o, a)->z

Here, the pseudo parity check matrix is a sparse parity check matrix having a row weight of 3 and a column weight of 2. Therefore, speed-up and memory saving are achieved by making full use of a sparse matrix operation (holding non-zero element and an index thereof in a memory and using the non-zero element and the index for an operation). A minimum value of the loop in the factor graph is 6 and the size is relatively large and the sparsity is also remarkable. Therefore, the pseudo parity check matrix is a parity check matrix in which good decoding performance can be expected.

[2-1-2-5. BP decoding of a second example]

Subsequently, a second example is explained. For example, the second example is BP decoding that makes use of the structure of the pseudo parity check matrix.

In the second example, the BP decoding executes log-odds calculation, variable node processing #1, variable node processing #2, check node processing X, and bit string extraction processing. The second example is a configuration in which the structure of the pseudo parity check matrix is configured by two matrices. For example, a BP decoding unit includes a log-odds calculation unit that performs log-odds calculation, a variable node processing unit that performs variable node processing #1 and variable node processing #2, a check node processing unit that performs the check node processing X, and a bit string extraction unit that performs bit string extraction. Note that the block configuration explained above is merely an example and a block configuration of the BP decoding may be any configuration.

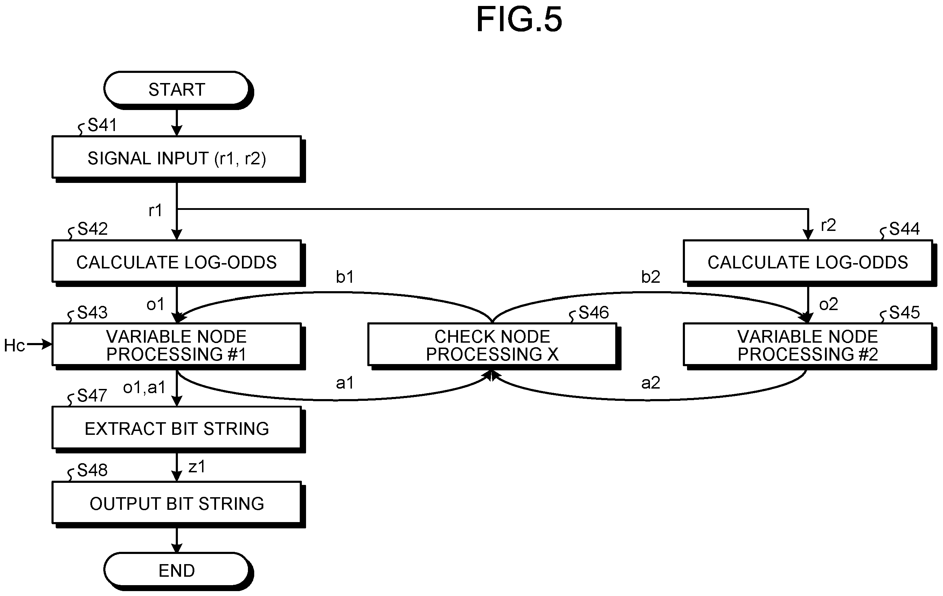

A flow of the BP decoding of the second example is explained with reference to FIG. 5. FIG. 5 is a diagram illustrating the second example of the decoding processing. In the following explanation, a case in which the BP decoding unit of the Ising decoder performs various kinds of processing illustrated in FIG. 5 is explained as an example. Note that explanation is omitted as appropriate about the same points as the points illustrated in FIG. 4.

As illustrated in FIG. 5, the BP decoding unit of the Ising decoder receives an input of a signal (step S41). For example, the reception signals r1 and r2 and the check matrix Hc are input to the BP decoding unit.

Then, the BP decoding unit performs the log-odds calculation (step S42). For example, the BP decoding unit calculates log-odds o1 from the reception signal r1.

Then, the BP decoding unit performs the variable node processing #1 (step S43). For example, the BP decoding unit performs the variable node processing #1 by calculating belief a1. For example, the BP decoding unit performs the variable node processing #1 by calculating the belief a1 from the check matrix Hc, the log-odds o1, and the belief b1.

Then, the BP decoding unit performs the log-odds calculation (step S44). For example, the BP decoding unit calculates log-odds o2 from the reception signal r2.

Then, the BP decoding unit performs the variable node processing #2 (step S45). For example, the BP decoding unit performs the variable node processing #2 by calculating belief a2. For example, the BP decoding unit performs the variable node processing #2 by calculating the belief a2 from the log-odds o2 and the belief b2.

The BP decoding unit performs the check node processing X (step S46). For example, the BP decoding unit performs the check node processing X by calculating the beliefs b1 and b2. For example, the BP decoding unit performs the check node processing X by calculating the beliefs b1 and b2 from the beliefs a1 and a2. The BP decoding unit repeatedly performs step S42 to step S46. Note that step S42 to step S46 are for steps for explaining the respective kinds of processing and may be performed in any order if the processing is possible. For example, the processing in steps S44 and S45 may be performed in parallel to the processing in steps S42 and S43 or may be performed earlier than the processing in steps S42 and S43.

Then, the BP decoding unit performs bit string extraction (step S45). For example, the BP decoding unit performs the bit string extraction by calculating a bit string z1, that is, the bit string z from the log-odds o1 and the belief a1. In the second example, the signal and the binary variable are treated by being divided into a variable deriving from the original binary variable and a variable deriving from a pair of two binary variables.

An example of an algorithm for performing the BP decoding of the second example is explained below. For example, the BP decoding of the second example is an algorithm for performing the following procedures #5-1 to #5-7.

- Procedure #5-1. Input the reception signals r1 and r2 and the check matrix core Hc
- Procedure #5-2. Calculating the log-odds o1 and o2 from the reception signals r1 and r2
- Procedure #5-3. Initialize forward backward beliefs a1, a2, b1, and b2
- Procedure #5-4. Variable node processing #1: (H, o1, b1) ->a1
- Procedure #5-5. Variable node processing #2: b1 ->a1
- Procedure # 5-6. Check node processing x: (a1, a2)->(b1, b2)
- Procedure #5-7. Designation condition repetition and bit string z output: (o1, a1)->z1 (=z)

In the case of the second example, a memory that should be retained can be reduced. In the case of the second example, operations in which zero appears can be reduced.

[2-1-2-6. Spin variable determination]

By the spin variable determination, a decoded bit sequence is input and a spin variable array is output. The spin variable determination unit of the Ising decoder performs the spin variable determination. For example, the spin variable determination unit receives an input of the decoded bit sequence z and outputs a spin variable array s=1-2z.

[3. Third Embodiment]

Subsequently, an example of a program (a function) for executing processing concerning the present disclosure is explained as a third embodiment. Note that the program explained below is, for example, a program for executing kinds of processing having the same names among the kinds of processing explained in the second embodiment. For example, the program explained below is a program for executing the Ising decode processing explained above. For example, the program explained below is executed by the Ising decoder explained above (for example, the information processing apparatus 100 or the like).

[3-1. Main function]

First, a main function is explained below. The main function explained below is a function (program) example for receiving an input of a coefficient matrix of the Ising model and outputs a basis spin coordination.

```
function ising_decoder(J, h):
    Q = ising_to_qubo(J, h)
    r, H = qubo_to_decodeing(Q)
    z = bp (H, r)
    s = 1 - 2 * z [1:N]
    return s
```

The "ising_decoder" described above, which is the main function, is a function (a program) for receiving the coefficient matrices J and h of the Ising model as an input and outputs the spin variable s. the "ising_decoder" is the main function for executing the Ising decode processing.

[3-2. Ising model-QUBO conversion]

Subsequently, a function for executing the Ising model-QUBO conversion (also referred to as "Ising model-QUBO conversion function") is explained below. The Ising model-QUBO conversion function explained below is a function (program) example for receiving an input of the coefficient matrix of the Ising model and outputs the coefficient matrix of the QUBO.

```
function ising_to_qubo(J, h):
```

```
Q = -4J + diag(2h + 4sum(J, axis=1))
Q = (Q + Q.transpose()) / 2
return Q
```

The function diag (x) explained above is a function for forming a diagonal matrix having the input vector x as a diagonal component. For example, the function diag (x) can be used in numpy, which is one of libraries of a programming language python. The sum(J, axis=1) is a function of adding up matrices J concerning a designated axis. This function can also be used in numpy. A member function transpose () of the matrix Q is a function for forming a transposed matrix of Q. If Q is a complex number matrix, the member function transpose () is a function for forming an associated matrix of Q. This function can also be used in numpy. The "ising_to_qubo" described above, which is an Ising model-QUBO conversion function, is a function (a program) for receiving the coefficient matrices J and h of the Ising model as inputs and outputs the coefficient matrix Q of the QUBO. The "ising_to_qubo" corresponds to the function described in the first line of the "ising_decoder" described above, which is the main function.

[3-3. QUBO-decoding problem conversion]

Subsequently, a function for performing the QUBO-decoding problem conversion (also referred to as "QUBO-decoding problem conversion function") is explained below. The QUBO-decoding problem conversion function explained below is a function (program) example for receiving an input of the coefficient matrix of the QUBO and outputs a signal string, a code string, and a parity check matrix in the decoding problem.

```
function qubo_to_decoding(Q):
    r1 = 1/2 - 2* sum(Q, axis=1)
    r2 = 1/2 * (1 + Q)
    r = concatenate(r1, r2)
    H1 = create_binary_matrix(Q)
    H2 = I(M)
    H = concatenate(H1, H2)
    return r, H
```

The "qubo_to_decoding", which is the QUBO-decoding problem transform function, is a function (a program) for receiving the coefficient matrix Q of the QUBO as an input and outputs, for example, the signal string r and the parity check matrix H. The "qubo_to_decoding" corresponds to a function described in the second line in the "ising_decoder," which is the main function.

[3-4. BP decoding of a first example]

Subsequently, a function for executing BP decoding of a first example (also referred to as "BP decoding function of the first example") is explained below. The BP decoding function of the first example explained below is a function (program) example for receiving an input of a pseudo parity check matrix (H in the BP decoding function of the first example explained below) and a pseudo signal string (r in the BP decoding function of the first example explained below) and outputs a code string decoded by ordinary BP decoding.

```
function bp_decoding_v1(H, r):
    lodds = calc_log_odds(r)
    alpha = 0s
    for i = 1 to max_iteration
    beta = update_check_node(H, lodds, alpha)
    alpha = update_variable_node(H, beta)
    z = get_solution(alpha)
    return z
```

The "bp_decoding_v1" described above, which is the BP decoding function of the first example, is, for example, a function (a program) for receiving the pseudo signal string r and the pseudo parity check matrix H as inputs and outputs the bit string z. The "bp_decoding_v1" is a function used as the function "bp (H, r)" described in the third line of the "ising_decoder" described above, which is the main function. For example, when the BP decoding function (bp_decoding_v1) of the first example is used, the description of the function "bp(H, r)" in the main function "ising_decoder" is changed to description (for example, bp_decoding_v1(H, r)") adjusted to "bp_decoding_v1".

[3-5. BP decoding of a second example]

Subsequently, a function for executing BP decoding of a second example (also referred to as "BP decoding function of the second example") is explained below. The BP decoding function of the second example explained below is a function (program) example for receiving an input of a core portion of the pseudo parity check matrix (Hc in the BP decoding function of the second example explained below) and the pseudo signal strings (r1 and r2 in the BP decoding function of the second example explained below) and outputs a code string decoded by extended BP decoding.

```
function bp_decoding_v2(Hc, r1, r2):
    lodds1 = calc_log_odds(r1)
    lodds2 = calc_log_odds(r2)
    alpha = 0s
    for i = 1 to max_iteration
    beta = update_check_node(Hc, lodds1, alpha)
    alpha = update_variable_node_v2(Hc, lodds2, beta)
    z = get_solution (alpha)
    return z
```

The "bp_decoding_v2" described above, which is the BP decoding function of the second example is, for example, a function (a program) for receiving the pseudo signal strings r1 and r2 and the matrix Hc of the core portion of the pseudo parity check matrix as inputs and outputs the bit string z. The "bp_decoding_v2" is a function used as the function "bp(H, r)" described in the third line of the "ising_decoder", which is the main function. For example, when the BP decoding function (bp_decoding_v2) of the second example is used, the description of the function "bp(H, r)" in the main function "ising_decoder" is changed to description (for example, "bbp_decoding_v2(Hc, r1, r2)") adjusted to" bp_decoding_v2".

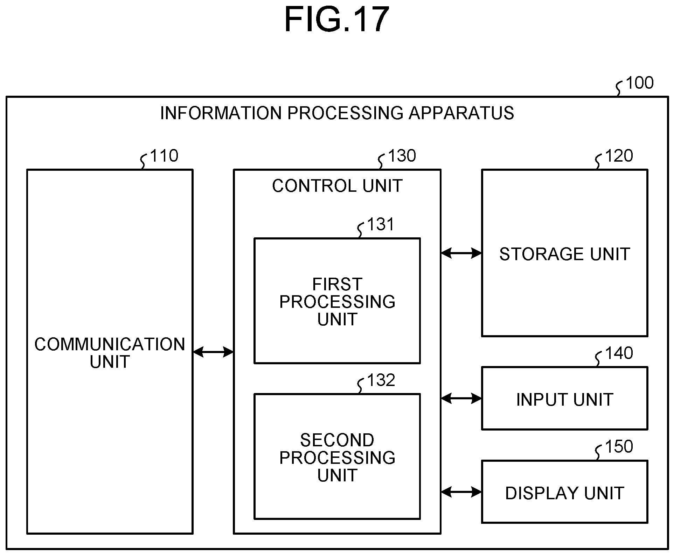

For example, the information processing apparatus 100 stores, in a storage unit 120 (see FIG. 17), the programs (the functions) explained above and programs (functions) invoked by the programs and executes processing using the programs.

[4. Fourth Embodiment]

As a fourth embodiment, an overall image of a system is explained. In the following explanation, a system overall image of an application for using the processing of the present disclosure is explained.

[4-1. Information processing system example]

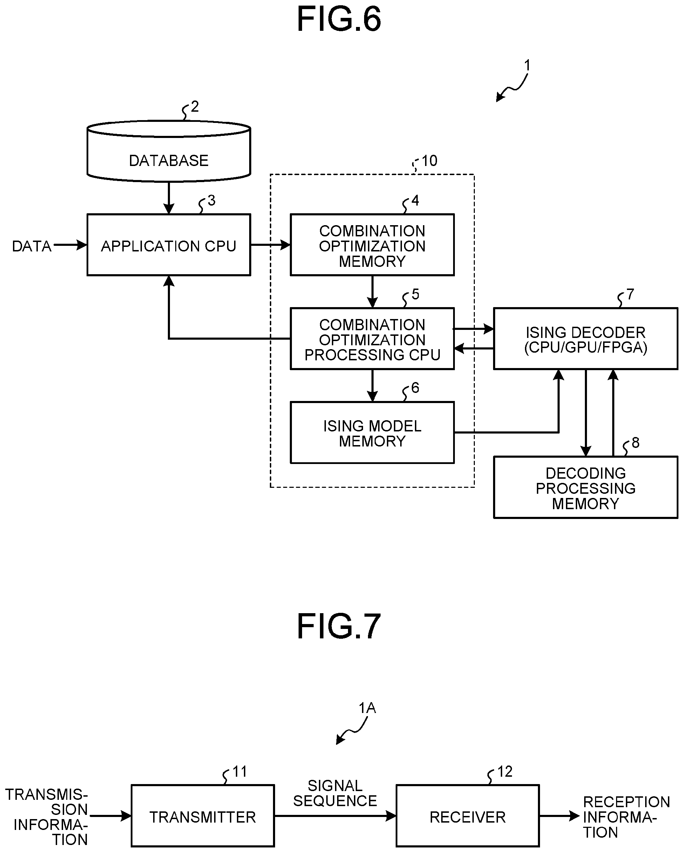

First, a configuration of an information processing system 1 is explained with reference to FIG. 6. FIG. 6 is a diagram illustrating an example of the configuration of the information processing system. As illustrated in FIG. 6, the information processing system 1 includes a database 2, a CPU (Central Processing Unit) 3, a combination optimization memory 4, a combination optimization processing CPU 5 (also referred to as combination optimization processing unit), an Ising model memory 6, an Ising decoder 7, and a decoding processing memory 8 as components. In the following explanation, the combination optimization memory 4, the combination optimization processing CPU 5, and the Ising model memory 6 is sometimes collectively referred to as combination optimization conversion unit 10.

Note that, in the information processing system 1, the components of the database 2, the application CPU 3, the combination optimization memory 4, the combination optimization processing CPU 5, the Ising model memory 6, the Ising decoder 7, and the decoding processing memory 8 may be configured as one apparatus or may be configured as a plurality of apparatuses. When the components are configured as one apparatus, for example, the components are communicably connected by any signal line such as a bus.

When the components are configured as a plurality of apparatuses (arranged in a distributed manner), for example, the components are communicably connected by wire or radio via a predetermined communication network (network). The information processing system 1 may include a first apparatus including the combination optimization conversion unit 10 and a second apparatus including the Ising decoder 7. For example, the information processing system 1 may include three apparatuses of a data server apparatus including the database 2, a first apparatus (an optimization processing apparatus) including the application CPU 3 and the combination optimization conversion unit 10, and a second apparatus (for example, the information processing apparatus 100) including the Ising decoder 7 and the decoding processing memory 8. Note that the configuration explained above is merely an example and any configuration can be adopted as the apparatus configuration of the information processing system 1.

The information processing system 1 is a system for realizing an application including combination optimization.

Examples of the application include communication path encoding/decoding, compression sensing, and super resolution. In this case, the kinds of combination optimization included in the application are respectively maximum likelihood decoding or 10 norm minimization. The components of the information processing system 1 are explained below.

[4-2. Application CPU]

The application CPU 3 is a CPU (a processing device) that controls the entire application. Note that the application CPU 3 is not limited to the CPU and may be realized by, for example, another processing device (processor) such as a GPU (Graphics Processing Unit) or an integrated circuit such as an ASIC (Application Specific Integrated Circuit) or an FPGA (Field Programmable Gate Array).

For example, when processing for treating combination optimization is required, the application CPU 3 writes information in the combination optimization memory 4 and starts the combination optimization processing CPU 5, which that is the combination optimization processing unit, to receive a processing result in the combination optimization processing CPU 5.

[4-3. Combination optimization memory]

The combination optimization memory 4 is a memory that stores information treated by the original combination optimization (also referred to as "combination optimization information"). The combination optimization memory 4 is realized by, for example, a semiconductor memory element such as a RAM(Random Access Memory) or a flash memory or a storage device such as a hard disk or an optical disk.

The combination optimization information is different depending on an application but is, for example, dynamically obtained data and statically prepared data. For example, in the case of an application of communication path maximum likelihood decoding, the data is a reception signal and the database is a generation matrix or a parity check matrix. In addition, in the case of a compression sensing application, the data is information from a sensor and the database is an observation matrix, a dictionary matrix, or the like.

[4-4. Combination optimization processing CPU]

The combination optimization processing CPU 5 functions as the combination optimization processing unit, calculates coefficient information of the Ising model based on the information recorded in the combination optimization memory 4, and writes the coefficient information in the Ising model memory 6. Note that the combination optimization processing CPU 5 is not limited to a CPU and may be realized by, for example, another processing device (processor) such as a GPU or an integrated circuit such as an ASIC or an FPGA.

The combination optimization processing CPU 5 may use a database (database of the Ising model) of a conversion processing method for the combination optimization into the Ising model that has already been studied. In this case, the combination optimization processing CPU 5 may simply pass, to processing thereof, data listed (stored) in advance in a database of a not-illustrated Ising model or the like and execute the processing. For example, the combination optimization processing CPU 5 may select a conversion processing method for the combination optimization into the Ising model stored in the database of the Ising model and calculate coefficient information of the Ising model with the conversion processing method.

The combination optimization processing CPU 5 starts the Ising decoder 7. Then, the combination optimization processing CPU 5 obtains a solution of the original combination optimization problem from the combination of the spin variables obtained from the Ising decoder 7 and returns a result of the solution of the application CPU 3. The processing by the combination optimization processing CPU 5 is not necessarily independent of the processing by the application CPU 3. For example, the application CPU 3 and the combination optimization processing CPU 5 may be integrated.

[4-5. Ising decoder]

The Ising decoder 7 performs processing of the Ising decode processing as explained above. The Ising decoder 7 is realized by, for example, a CPU, a GPU, or an FPGA. The Ising decoder 7 is not limited to the above and may be realized by, for example, a processing device (a processor) other than the CPU and the GPU, an FPGA, or the like.

The Ising decoder 7 acquires (reads) a coefficient matrix of the Ising model recorded in the Ising model memory 6 according to an instruction from the combination optimization processing CPU 5. Then, the Ising decoder 7 performs decoding algorithm processing using the acquired coefficient matrix of the Ising model, generates a spin variable string from an obtained code string, and returns the generated spin variable string to the combination optimization processing CPU 5.

Specifically, the Ising decoder 7 generates a QUBO coefficient matrix from an Ising model coefficient matrix.

Then, the Ising decoder 7 generates a pseudo parity check matrix and a pseudo signal string from the generated QUBO coefficient matrix. Then, the Ising decoder 7 decodes a code string from the generated pseudo parity check matrix and the generated pseudo signal string and sets the decoded string as an array of spin variables.

The Ising decoder 7 writes and stores the QUBO coefficient matrix, the pseudo parity check matrix, and the pseudo signal string generated halfway in the memory of the Ising decoder 7. Since the pseudo parity check matrix is (relatively) static information, the pseudo parity check matrix may be read from the database as predetermined information.

[4-6. Decoding processing memory]

The QUBO coefficient matrix, the pseudo parity check matrix, and the pseudo signal string required by the Ising decoder 7 are stored (written) in the decoding processing memory 8. An intermediate variable required in the BP decoding processing is stored (written) in the decoding processing memory 8. The decoding processing memory 8 is realized by, for example, a semiconductor memory element such as a RAM or a flash memory or a storage device such as a hard disk or an optical disk.

[5. Fifth Embodiment]

Subsequently, an example in which the processing concerning the present disclosure is used for a communication path encoding/decoding system 1A is explained as a fifth example. First, an overview of the communication path encoding/decoding system 1A is explained with reference to FIG. 7. FIG. 7 is a diagram illustrating the fifth embodiment to which the information processing of the present disclosure is applied. For example, the communication path encoding/decoding system 1A is an example of a system to which the information processing system 1 is applied.

In an example illustrated in FIG. 7, the communication path encoding/decoding system 1A is configured by a transmitter 11 that converts information into a signal sequence and transmits the signal sequence and a receiver 12 that restores the original information from the signal sequence. For example, the transmitter 11 transmits transmission information to the receiver 12 as a signal sequence and restores, as reception information, the original information from the signal sequence received by the receiver 12.

The transmitter 11 includes an information block generation unit, a message generation unit, a code generation unit, and a signal transmission unit. In the transmitter 11, the information block generation unit and the message generation unit (a message transmission unit) convert information into a bit string of a message. The code generation unit converts the converted bit string of the message into a code bit string. The signal transmission unit applies modulation or the like to the converted code bit string and transmits the code bit string to the receiver 12.

The receiver 12 is configured by a signal reception unit, a message decoding unit, and an information restoration unit. The signal reception unit converts a modulated signal into a baseband signal. The message decoding unit restores the bit string of the message from the baseband signal. The information restoration information restoration unit connects blocked messages to restore information. Note that, if a Reed-Solomon code, a BCH code, or the like is an outer code, the information restoration unit may perform decoding processing for the outer code.

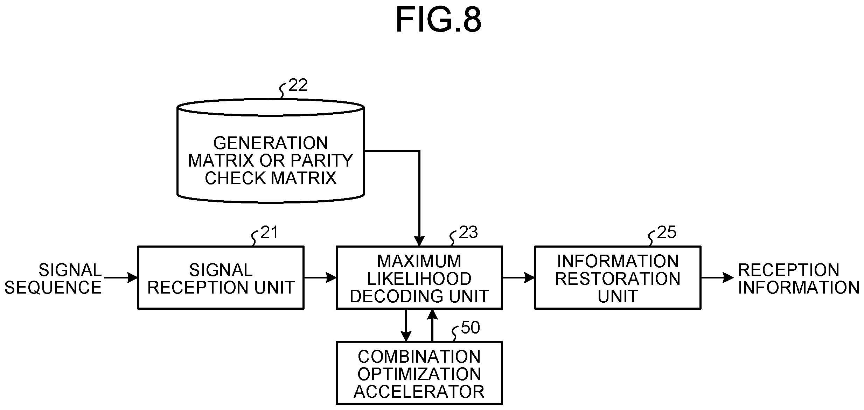

In the fifth embodiment, it is a portion of the receiver 12 that utilizes the information processing of the present disclosure. This point is explained with reference to FIG. 8. FIG. 8 is a diagram illustrating an example of a configuration of a receiver to which the information processing of the present disclosure is applied. As illustrated in FIG. 8, the receiver 12 includes a signal reception unit 21, a database 22, a maximum likelihood decoding unit 23 functioning as a message decoding unit, an information restoration unit 24, and a combination optimization accelerator 50. As explained above, FIG. 8 is a block diagram illustrating a configuration of the receiver 12 to which the information processing of the present disclosure is applied.

The database 22 functions as a storage device (a storage unit) that stores a generation matrix, a parity check matrix, and the like. Among the components In FIG. 8, as the signal reception unit 21 and the information restoration unit 24, the normal components (the signal reception unit and the information reception unit) explained above are used.

On the other hand, in the message decoding unit, here, maximum likelihood decoding is used instead of a decoding method that is usually and frequently used, for example, the belief propagation decoding. In FIG. 8, a part described as the maximum likelihood decoding unit 23 corresponds to the message decoding unit.

According to Non Patent Literature 1 described above, quantum annealing functioning as a combination optimization accelerator is used to realize this maximum likelihood decoding. According to Non Patent Literature 1 described above, there are a method deriving from a generation matrix of a code and a method deriving from a parity check matrix and, as the Ising model, an energy function is defined as indicated by the following Formula (47). For example, Formula (47) is an energy function in the case in which the energy function derives from the generation matrix of the code.

$$H_G(\boldsymbol{\sigma}, \boldsymbol{p}, \boldsymbol{a}) = \sum_{i=1}^{N} \left( \left( r_i - \frac{1}{2} \right) p_{i_{M_i}} + \sum_{m=2}^{M_i} \lambda_{i_m} H_{i_m}(\boldsymbol{\sigma}, \boldsymbol{p}, \boldsymbol{a}) \right) \qquad (47)$$

Here, σ in Formula (47) is a spin variable corresponding to a message bit and has a relation with a message bit m having length M as illustrated in the following Formula (48).

$$\boldsymbol{\sigma} = 1 - 2\boldsymbol{m} \qquad (48)$$

Further, p and a in Formula (47) are auxiliary spins introduced to satisfy a constraint that a code is generated from the generation matrix. In order to satisfy the constraint of the generation matrix, the energy function introduces a penalty term indicated by the following Formula (49).

$$H_{i_m} = \frac{1}{2} \left( p_{i_m} \, p_{i_{m-1}} + p_{i_m} \, \sigma_{i_m} + p_{i_{m-1}} \, \sigma_{i_m} \right)$$
$$+ \left( a_{i_m} + \frac{1}{2} \right) \left( 2a_{i_m} - p_{i_m} - p_{i_{m-1}} - \sigma_{i_m} \right) \qquad (49)$$

Here, $i_m$ represents an index of an m-th non-zero component from the left in an i-th row in the generation matrix. According to Non Patent Literature 1 described above, this penalty term is all 0 when the constraint is satisfied and is a positive value when the constraint is not satisfied. In addition, $\lambda_{im}$ is an undetermined constant having a positive value but, when this value is sufficiently large, $\lambda_{im}$ is equivalent to the maximum likelihood decoding.

The energy function deriving from the parity check matrix is expressed as indicated by the following Formula (50).

$$H_P(\boldsymbol{\sigma}, \boldsymbol{p}, \boldsymbol{a}) = \sum_{i=1}^{N} \left( r_i - \frac{1}{2} \right) \sigma_i + \frac{\lambda}{2} \left( K - \sum_{k=1}^{K} p_{k_{N_k}} \right) + \sum_{k=1}^{K} \sum_{m=2}^{N_k} \lambda_{k_m} H_{k_m}(\boldsymbol{\sigma}, \boldsymbol{p}, \boldsymbol{a}) \qquad (50)$$

Here, σ is a spin variable corresponding to a sign bit and has a relation with a sign bit x having length N as indicated by the following Formula (51).

$$\boldsymbol{\sigma} = 1 - 2\boldsymbol{x} \qquad (51)$$

Further, p and a in Formula (51) are auxiliary spins introduced such that a code satisfies a parity constraint by the parity check matrix. In order to satisfy the parity constraint, the energy function introduces a penalty term indicated by the following Formula (52).

$$H_{k_m} = \frac{1}{2} \left( p_{k_m} \, p_{k_{m-1}} + p_{k_m} \, \sigma_{k_m} + p_{k_{m-1}} \, \sigma_{k_m} \right) + \left( a_{k_m} + \frac{1}{2} \right) \left( 2a_{k_m} - p_{k_m} - p_{k_{m-1}} - \sigma_{k_m} \right) \qquad (52)$$

Here, $k_m$ represents an index of an m-th non-zero component from the left in a k-th row in the parity check matrix. According to Non Patent Literature 1 described above, this penalty term is all 0 when the constraint is satisfied and is a positive value when the constraint is not satisfied.

In addition, $\lambda_{km}$ is an undetermined constant having a positive value but, when this value is sufficiently large, $\lambda_{km}$ is equivalent to the maximum likelihood decoding. In all the schemes, the energy function of the Ising model is expressed by at most a secondary dimension of the spin variable including the auxiliary variables. Therefore, a quadratic coefficient matrix J and a linear coefficient matrix (vector) h of the Ising model can be extracted using a program or the like.

In Non Patent Literature 1 described above, the spin variables σ, p, and a of the basis state of the Ising model are acquired by inputting the coefficient matrices J and h of the Ising model to the quantum annealing system and the message bit string m is restored based on the spin variables σ, p, and a.

In the fifth embodiment, in Non-Patent Literature 1 described above, the combination optimization accelerator 50 (the Ising decoder) is used instead of a combination optimization accelerator in which quantum annealing is used. That is, the spin variables σ, p, and a of the basis state of the Ising model are acquired by inputting the coefficient matrices J and h of the Ising model to the Ising decoder and the message bit string m is restored based on the spin variables σ, p, and a.

[6. Sixth Embodiment]

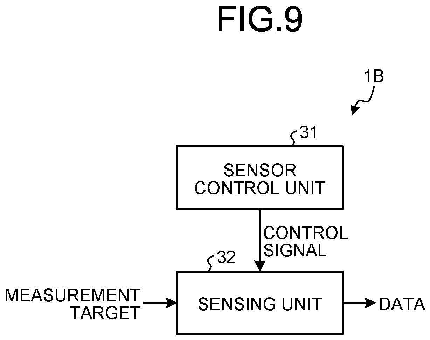

Subsequently, an example in which processing concerning the present disclosure is used in a sensing system is explained as a sixth example. First, an overview of the sensing system is explained with reference to FIG. 9. FIG. 9 is a diagram illustrating a sixth embodiment to which the information processing of the present disclosure is applied. For example, a sensing system 1B is an example of a system to which the information processing system 1 is applied.

In the example illustrated in FIG. 8, the sensing system 1B is configured by a sensor control unit 31 that controls a measurement state of a sensor (on/off, scheduling of measurement accuracy, or the like) and a sensing unit 32 that measures an actual measurement target and outputs data. Note that not only the sensor control unit 31 and the sensing unit 32 but also various components for realizing the sensing system 1B may be included in the sensing system 1B.

In a sensing system, partial data is acquired instead of acquiring complete measurement data for the purpose of power saving of a sensor, reduction in the number of sensors themselves, and compression of a sensing data size. The sensing for acquiring partial data in this way is sometimes referred to as compressed sensing.

As explained above, when only partial data is acquired by compressed sensing, data is restored by signal processing. In this case, the sensing unit 32 is configured by, besides a sensor that acquires data from a measurement target, a modeling unit (also referred to as "sparse model processing unit") that performs data modeling called sparse modeling and a data restoration unit (also referred to as" information restoration unit") that restores complete data based on the modeling.

Usually, the measurement target is, for example, a tomographic image acquired by an MRI (Magnetic Resonance Imaging) system or a measurement target measured by a sensor array such as distribution of surrounding objects measured by a radar (lidar) array or distribution of sound sources measured by a microphone array.

These measurement targets are input to the sensor and the sparse model processing unit calculates a small number of explanatory variables for explaining data. In this processing, an explanatory variable is obtained using a database called a dictionary matrix or an observation matrix.

Then, the data restoration unit restores data corresponding to the complete data based on the explanatory variable obtained by the sparse model processing unit, model information prepared in advance, and the like. For example, in the case of MRI or CT (Computed Tomography), the restored data is a tomographic image and, in the case of a radar array, the restored data is an object distribution map (pedestrian distribution (in-vehicle radar) and water droplet distribution (weather radar) in the periphery) or the like.

In general, the modeling unit (the sparse model processing unit) uses an algorithm of an optimization method called l1 norm minimization. For example, Lasso (Least Absolute Shrinkage and Selection Operator) is a representative example of the algorithm.

On the other hand, in the sparse modeling, it is ensured that a technique called l0 norm minimization reaches the most correct solution and, for the l1 norm minimization to exhibit performance equivalent to the l0 norm, it is necessary to satisfy a certain condition that is difficult to verify. That is, the l0 norm minimization is the most ideal in the sparse modeling. At the same time, however, it is also known that the l0 norm minimization is computationally difficult and impractical in combination optimization problems.

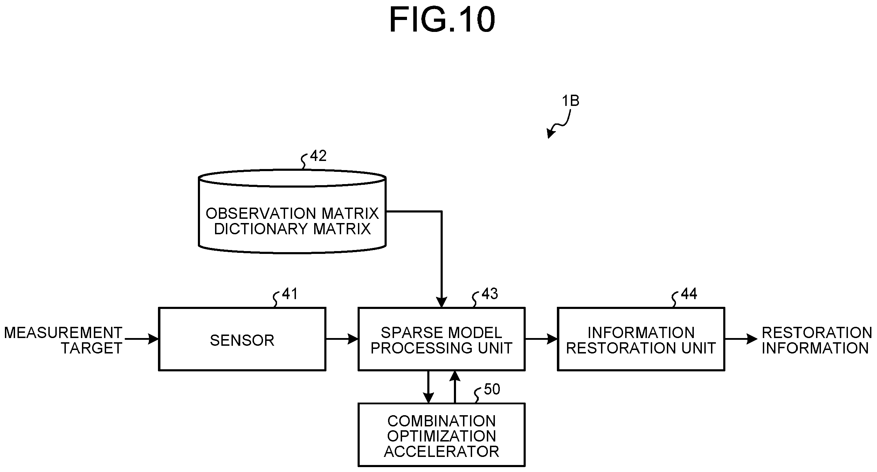

FIG. 10 referred to below illustrates a configuration for making the l0 norm minimization more practical in the combination optimization accelerator 50 to which the first embodiment to the third embodiment are applied. FIG. 10 is a diagram illustrating an example of a configuration to which the information processing of the present disclosure is applied.

A sensing system 1B illustrated in FIG. 10 includes a sensor 41, a database 42, a sparse model processing unit 43 functioning as a modeling unit, an information restoration unit 44 that is a data restoration unit, and the combination optimization accelerator 50. For example, the sensor 41, the database 42, the sparse model processing unit 43, the information restoration unit 44, and the combination optimization accelerator 50 correspond to the sensing unit 32 in FIG. 9.

The sensor 41 is a device that converts an observed phenomenon into an electrical signal or data and outputs the electrical signal or the data. Note that the sensor 41 may be any sensor such as an image sensor, a sound sensor, an acceleration sensor, a position sensor, a temperature sensor, a humidity sensor, an illuminance sensor, or a pressure sensor. The database 22 functions as a storage device (a storage unit) that stores an observation matrix, a dictionary matrix, and the like.

Here, in the conventional sparse model processing, it is common to use a l1 minimization algorithm. The l1 minimization algorithm is included in the category of linear programming rather than combination optimization. A solution can be obtained sufficiently practically by an existing computer.

However, when the l0 minimization algorithm is used, an algorithm for solving combination optimization is required. The combination optimization accelerator 50 explained in the sixth embodiment is used.

In the following explanation, an example in which the l0 minimization algorithm is solved by quantum annealing is briefly explained. Quantization sparse modeling for bit-quantizing a latent variable (an explanatory variable) as indicated by the following Formula (53) is conceived.

$$z_i(b_i) = \sum_{k=1}^{K} \alpha_k b_{ik} \qquad (53)$$

Here, a k-th bit in K-bit quantized expression of $z_i$ of $b_{ik}$ is represented. When $\alpha_k$ is a constant and $\alpha_k = 2^{-k}$, quantization with a quantization width $2^{-k}$ and a section $[0,1-2^{-k}]$ can be realized.

When an observation matrix (a dictionary matrix) is represented as U and observation data is represented as x, an energy function of an Ising model corresponding to the l0 minimization is represented as indicated by the following Formulas (54) and (55).

$$(b,c) = \sum_{i=1}^{N}\left(x_i - \sum_{j=1}^{M} u_{ij} z_j(b_i)\right)^2 + \gamma \sum_{i=1}^{M}(1 - c_{iK-1}) + \lambda_p \sum_{i=1}^{M}\sum_{k=1}^{K-1} C_{ik}(b_i, c_i) \qquad (54)$$

$$C_{ik} = 3c_{ik} + c_{ik-1}(1 - b_{ik}) - 2c_{ik}c_{ik-1} - 2c_{ik}(1 - b_{ik}) \qquad (55)$$

Here, c in Formula (54) and Formula (55) is an auxiliary variable introduced to calculate an l0 norm. A first term is an ordinary least squares error term. A second term is an ls0 norm, and a third term is a penalty term representing a constraint condition that should be satisfied by an auxiliary variable introduced to calculate the l0 norm.

Note that, since variables b and c are binary variables, in order to represent the energy function with a spin variable, conversion indicated by the following Formulas (56) and (57) is necessary.

$$b = \frac{1 - \sigma_b}{2} \qquad (56)$$

$$c = \frac{1 - \sigma_c}{2} \qquad (57)$$

Even if the energy function is represented by the spin variable, this function is a quadratic function concerning the spin variable. Therefore, a quadratic coefficient matrix J and a linear coefficient matrix (vector) h of the Ising model can be extracted using a program or the like.

By inputting the coefficient matrices J and h of these Ising models to the quantum annealing system, spin variables $\sigma_b$ and $\sigma_c$ of the basis state of the Ising model can be acquired and bit representation b of the sparse explanatory variable z can be obtained based on the spin variables $\sigma_b$ and $\sigma_c$.

Since accuracy is low in the bit representation, only an explanatory dimension in which a value by the bit representation is not 0 in the explanatory variable z is selected and a solution is obtained again. In this way, a value of the sparse explanatory variable can be obtained.

In the sixth embodiment, in the scheme explained above, the combination optimization accelerator 50 (an Ising decoder) is used instead of the combination optimization accelerator in which the quantum annealing is used. By inputting the coefficient matrices J and h of these Ising model to the Ising decoder, the spin variables b and c of the basis state of the Ising model are acquired and the bit representation b of the sparse explanatory variable z is acquired based on the spin variables b and c.

Since accuracy is low in the obtained bit representation, only an explanatory dimension in which the value in the bit representation is not 0 in the explanatory variable z is selected and the solution is obtained again. In this way, a value of the sparse explanatory variable can be obtained. The complete data is restored in the next data restoration block using the sparse explanatory variable obtained in this way. The restoration method and the restored data are equivalent to the conventional configuration explained above.

[7. Seventh Embodiment]

Subsequently, an example in which the processing concerning the present disclosure is used in an application development system including combination optimization (also simply referred to as "development system") is explained as a seventh embodiment. First, an overview of the development system is explained with reference to FIG. 11. FIG. 11 is a diagram illustrating the seventh embodiment to which the information processing of the present disclosure is applied. For example, a development system 1C is an example of a system to which information processing system 1 is applied.

As illustrated in FIG. 11, the development system 1C includes a terminal 51, a combination optimization database 52, a development application 53, a combination optimization unit 54, an Ising decoder 55, a quantum idea type computer 56, a quantum annealer 57, and a gate type quantum computer 58 as components.

Note that, in the development system 1C, the components of the terminal 51, the combination optimization database 52, the development application 53, and the combination optimization unit 54 may be configured as one apparatus or may be configured as a plurality of apparatuses. When the components are configured as one apparatus, for example, the components are communicably connected by any signal line such as a bus. For example, when the terminal 51 includes the combination optimization database 52, the development application 53, and the combination optimization unit 54, the terminal 51 communicates with the apparatuses of the Ising decoder 55, the quantum idea type computer 56, the quantum annealer 57, and the gate type quantum computer 58 and transmits and receives information. In this case, in the terminal 51, for example, an application development tool (a development tool) including the development application 53 is installed.

When the components of the terminal 51, the combination optimization database 52, the development application 53, and the combination optimization unit 54 are configured as a plurality of apparatuses (arranged in a distributed manner), for example, the components are communicably connected by wire or radio via a predetermined communication network (network). For example, the development system 1C may include, for example, the terminal 51 in which the development application 53 is installed, a server apparatus including the combination optimization database 52, an optimization processing apparatus including the combination optimization unit 54, the Ising decoder 55, the quantum idea type computer 56, the quantum annealer 57, and the gate type quantum computer 58. In this case, the optimization processing apparatus communicates with the apparatuses of the terminal 51, the Ising decoder 55, the quantum idea type computer 56, the quantum annealer 57, and the gate type quantum computer 58 and transmits and receives information. Note that the configuration explained above is merely an example and any apparatus configuration can be adopted as an apparatus configuration of the development system 1C.

The development system 1C stores expressions by Ising models of various kinds of combination optimization as a database (for example, the combination optimization database 52) and can switch the expressions in response to a user's request. The development system 1C includes the terminal 51, which is a terminal unit functioning as an interface with a user, the combination optimization database 52 that stores an expression of an Ising model of combination optimization, a main body of the development application 53, the combination optimization unit 54, and the Ising decoder 55. In the combination optimization database 52, typical data conversion processes of various kinds of combination optimization are stored as a library. Specifically, in the combination optimization database 52, a function (or a class) for receiving, as inputs, data and a database used in individual applications including combination optimization and outputting a coefficient of the Ising model is stored.

[7-1. Computer example]

Various computers that execute calculation are explained below.

(Ising decoder 55)

The Ising decoder 55 is a computer that receives the coefficient matrix of the Ising model as an input and outputs a solution of the spin variable in the basis state. The Ising decoder 55 performs the processing of the Ising decode processing explained above like the Ising decoder 7 in FIG. 6. The Ising decoder 55 is realized by, for example, a CPU, a GPU, or an FPGA. For example, the Ising decoder 55 may be the information processing apparatus 100 explained below.

For example, the Ising decoder 55 receives the coefficient matrix of the Ising model from the combination optimization unit 54 and performs the Ising decode processing using the received coefficient matrix of the Ising model to thereby derive and solution of the spin variable in the basis state. The Ising decoder 55 transmits the derived solution of the spin variable in the basis state to the combination optimization unit 54.

(Quantum idea type computer 56)

The quantum idea type computer 56 is a computer using a digital circuit. For example, the quantum idea type computer 56 is dedicated hardware that, while diverting an idea of embedding combination optimization in the Ising model, using a non-quantum device such as a transistor circuit, speeds up simulated annealing for performing energy minimization with thermal fluctuation. The quantum idea type computer 56 is a computer using a CMOS(Complementary metal-oxide-semiconductor), a digital circuit, or the like. For example, the quantum idea type computer 56 may be a computer using a processor such as a GPU or an integrated circuit such as an FPGA.

For example, the quantum idea type computer 56 receives the coefficient matrix of the Ising model from the combination optimization unit 54 and derives a solution of the spin variable in the basis state with the simulated annealing using the received coefficient matrix of the Ising model. The quantum idea type computer 56 transmits the derived solution of the spin variable in the basis state to the combination optimization unit 54.

(Quantum Annealer 57)

The quantum annealer 57 is a computer using a quantum annealing scheme. The quantum annealer 57 is a quantum annealing machine (a quantum computer) using a quantum bit for an Ising spin.

For example, the quantum annealer 57 receives the coefficient matrix of the Ising model from the combination optimization unit 54 and derives a solution of the spin variable in the basis state with the quantum annealing using the received coefficient matrix of the Ising model. The quantum annealer 57 transmits the derived solution of the spin variable in the basis state to the combination optimization unit 54.

In the following explanation, a configuration example of the quantum annealer 57 is explained with reference to FIG. 12. FIG. 12 is a diagram illustrating a configuration example of the quantum annealer.

As illustrated in FIG. 12, the quantum annealer 57 includes a communication unit 571, a storage unit 572, a quantum device unit 573, and a control unit 574. Note that the quantum annealer 57 may include an input unit (for example, a keyboard or a mouse) that receives various kinds of operation from an administrator or the like of the quantum annealer 57 and a display unit (for example, a liquid crystal display) for displaying various kinds of information.

The communication unit 571 is realized by, for example, an NIC (Network Interface Card) or a communication circuit. The communication unit 571 is connected to a predetermined network (the Internet or the like) by wire or radio and transmits and receives information to and from other apparatuses and the like such as an apparatus (an optimization processing apparatus) including the combination optimization unit 54 via the network.

The storage unit 572 is realized by, for example, a semiconductor memory element such as a RAM or a flash memory or a storage device such as a hard disk or an optical disk. The storage unit 572 stores various kinds of information used for displaying information.

The quantum device unit 573 executes various quantum calculations. For example, the quantum device unit 573 is realized by a quantum processing unit (QPU). The quantum device unit 573 realizes, based on, for example, parameters of an Ising model received from another apparatus such as an apparatus including the combination optimization unit 54, a basis state of the Ising model. In other words, the quantum device unit 573 realizes an optimal spin arrangement in which the Ising model is in the basis energy state. That is, the quantum device unit 573 realizes a state in which the optimization problem is optimized.

The quantum device unit 573 is configured from, for example, a plurality of quantum bits. The quantum device unit 573 is cooled to near the absolute 0 degree in advance. After the parameters of the Ising model are input to the quantum device unit 573, the quantum device unit 573 temporally develops a ratio between the Ising model and a transverse magnetic field model (a quantum fluctuation model) on the inside. Consequently, the optimal spin arrangement corresponding to the parameters of the Ising model is realized on the quantum device unit 573. As explained above, the optimum spin arrangement of the Ising model is physically realized on the quantum device unit 573. Then, by the quantum device unit 573 being measured, the optimal spin arrangement of the Ising model can be obtained. Consequently, the quantum device unit 573 can optimize a discrete optimization problem. For example, the quantum device unit 573 can optimize an optimization problem of an objective function of a binary quadratic form.

The control unit 574 is implemented by, for example, a CPU or a GPU executing a program stored inside the quantum annealer 57 using a RAM or the like as a work area. The control unit 574 is a controller and may be realized by an integrated circuit such as an ASIC or an FPGA.

As illustrated in FIG. 12, the control unit 574 includes an acquisition unit 575, a calculation unit 576, and a transmission unit 577 and implements or executes a function and action of information processing explained below. Note that an internal configuration of the control unit 574 is not limited to the configuration illustrated in FIG. 12 and may be another configuration if the configuration is a configuration for performing information processing explained below.

The acquisition unit 575 receives various kinds of information. The acquisition unit 575 receives various kinds of information from an external information processing apparatus. The acquisition unit 575 receives various kinds of information from another information processing apparatus such as an apparatus including the combination optimization unit 54.

The acquisition unit 575 performs calculation using, for example the quantum device unit 573 and receives an instruction for measurement from the other information processing apparatus such as the apparatus including the combination optimization unit 54. The acquisition unit 575 receives the parameters of the Ising model as an instruction of calculation (measurement) by the quantum device unit 573.

The acquisition unit 575 acquires various kinds of information. The acquisition unit 575 acquires information from the storage unit 572. The acquisition unit 575 acquires various kinds of information from an external information processing apparatus such as an apparatus having the combination optimization unit 54. The acquisition unit 575 acquires input information received by the input unit. The acquisition unit 575 acquires, for example, information concerning the parameters of the Ising model from the external information processing apparatus. The acquisition unit 575 acquires a measurement result (a calculation result) of the quantum device unit 573 by the calculation unit 576.

The calculation unit 576 executes various calculations. The calculation unit 576 executes calculation using the quantum device unit 573. The calculation unit 576 measures the quantum device unit 573. The calculation unit 576 measures the quantum device unit 573 in which the optimal spin arrangement of the Ising model is realized.

For example, the calculation unit 576 executes calculation using the Ising parameters received by the acquisition unit 575 from the apparatus including the combination optimization unit 54.

The transmission unit 577 transmits various kinds of information to the external information processing apparatus. For example, the transmission unit 577 transmits the various kinds of information to the other information processing apparatus such as the apparatus including the combination optimization unit 54. The transmission unit 577 transmits information stored in the storage unit 572.

The transmission unit 577 transmits the various kinds of information based on information from the other information processing apparatus such as the apparatus including the combination optimization unit 54. The transmission unit 577 transmits the various kinds of information based on the information stored in the storage unit 572.

The transmission unit 577 transmits a measurement result of the quantum device unit 573 by the calculation unit 576 to the apparatus that instructed the calculation. The transmission unit 577 transmits the measurement result of the quantum device unit 573 by the calculation unit 576 to a transmission source of the parameters. The transmission unit 577 transmits the measurement result of the quantum device unit 573 by the calculation unit 576 to a request source of the calculation. The transmission unit 577 transmits the measurement result of the quantum device unit 573 by the calculation unit 576 to the other information processing apparatus such as the apparatus including the combination optimization unit 54.

For example, in the example illustrated in FIG. 12, the transmission unit 577 transmits a value of an Ising spin calculated (measured) using the parameters received from the apparatus including the combination optimization unit 54 to the apparatus including the combination optimization unit 54.

(Gate type quantum computer 58)

The gate type quantum computer 58 is a computer using a quantum gate scheme. Although detailed explanation is omitted because the gate type quantum computer 58 is a known technology, the gate type quantum computer 58 is a quantum computer that performs arithmetic processing (calculation processing) with a quantum gate. As a strong aspect, the quantum annealing scheme is specialized in combination optimization. On the other hand, the quantum gate scheme can treat general-purpose calculation and an algorithm based on the quantum gate scheme has already been proposed for specific calculation. For example, a method called QAOA (Quantum Approximate Optimization Algorithm) is a method of treating optimization in the same manner as the quantum annealing.

[7-2. User interface]

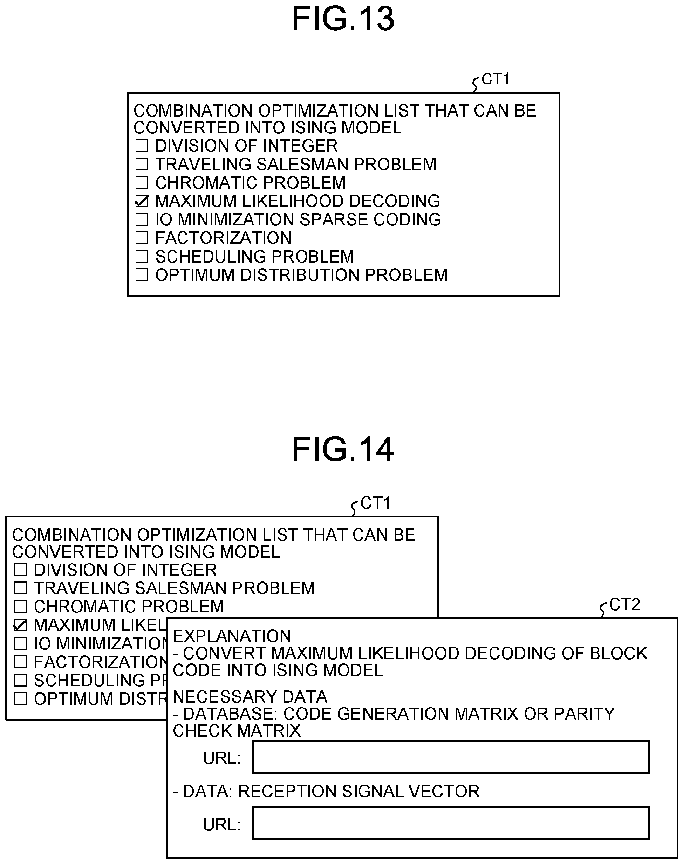

A user interface (hereinafter sometimes described as "UI") for a user who uses the development system 1C is explained below with reference to FIGS. 13 to 16. FIG. 13 to FIG. 16 are diagrams illustrating an example of a user interface.

For example, the terminal 51 of the development system 1C provides the UI. For example, the terminal 51 displays contents CT1 to CT4 explained below on a display (a screen). Note that a case in which the terminal 51 provides the UI is explained as an example. However, not only the terminal 51 but also another apparatus such as the information processing apparatus 100 may provide the UI to the user. In this case, the information processing apparatus 100 (see FIG. 17) may provide the UI using an input unit 140, the display unit 150, or the like. For example, the terminal 51 may be the information processing apparatus 100.

The development system 1C may display, for example, a list box on the terminal 51 in association with the library stored in the combination optimization database 52. For example, the terminal 51 displays a list of combination optimization tasks that can be converted into Ising models as indicated by the content CT1 in FIG. 13. The content CT1 includes, as the combination optimization tasks that can be converted into Ising models, integer classification, a traveling salesman problem, a chromatic problem, maximum likelihood decoding, l0 minimization sparse coding, factorization, a scheduling problem, and an optimum distribution problem. Note that the combination optimization tasks that can be converted into Ising models are not limited to the above.

Note that the combination optimization list that can be converted into Ising models is disclosed in, for example, the following document. •Ising formulations of many NP problems, Andrew Lucas < https://arxiv.org/abs/1302.5843 >

The user can check the list box and obtain explanation of the combination optimization. The terminal 51 displays explanation of the combination optimization selected by the user. For example, as indicated by the content CT2 in FIG. 14, terminal 51 displays explanation of the maximum likelihood decoding, which is the selected combination optimization. In the example illustrated in FIG. 14, the content CT2 is displayed in a window different from a window of the content CT1. In the content CT2, the maximum likelihood decoding, which is the selected combination optimization, is briefly explained. Necessary information can be input. Specifically, the content CT2 includes a box for inputting a URL (Uniform Resource Locator) that designates a database of a code generation matrix or a parity check matrix and a URL that designates a reception signal vector.

As explained above, since the necessary information is typically a database and data, a box to which the information can be input may be prepared. Note that, since a format of necessary data and the like are changed according to an application, it is desirable that the development application and the library can absorb the change. For example, the terminal 51 may display, according to selected combination optimization (application), a screen (content) for inputting information necessary for the combination optimization.

The user inputs the necessary information via the interface (for example, the content CT2) explained above, selects a solver, and executes the combination optimization. The solver may be configured to be able to select a quantum annealer and (a QAOA method of) a gate type quantum computer including an Ising decoder. The development system 1C may display, for example, a list of selectable solvers on the terminal 51.

For example, the terminal 51 displays a list of selectable solvers as indicated by the content CT3 in FIG. 15. The content CT3 includes, as the solvers, a quantum annealer, a quantum idea type computer, an Ising decoder, a gate type quantum computer, a linear integer programming solver, and an integer programming solver. Note that the solvers are not limited to the above.

The user checks the list box to select a solver. The content CT3 indicates a case in which the user selects the Ising decoder as the solver. To cancel the selection of the selected combination optimization, the user presses a "CANCEL" button in the content CT3. Consequently, the selection of the combination optimization is released and check of a checkbox of the combination optimization is changed to non-display. In FIG. 14, when the "CANCEL" button in the content CT3 is pressed, the selection of the Ising decoder is released and check of the check box of the Ising decoder is changed to non-display.

The development system 1C may display information (solver information) concerning the solver selected by the user. For example, the solver information includes information such as information indicating what kind of a solver the solver is, what is a back end (calculation hardware), whether the solver is suitable for a current problem, how much memory is used and how long time is required to solve the current problem.

For example, the terminal 51 displays the solver information of the solver selected by the user as indicated by the content CT4 in FIG. 16. The user determines, referring to the solver information, whether to finally execute or stop the combination optimization selected (input) this time. Then, when executing the combination optimization, the user presses a "SOLVE" button in the content CT3. The application side of the development system 1C performs actual combination optimization and returns an answer of the actual combination optimization according to this processing.

Note that, in the example explained above, a GUI (Graphical User Interface) is explained as an example. However, not only the GUI but also a command line input may be used. An SDK(Software Development Kit) or the like in which the processing explained above is prepared as an API (Application Programming Interface) to enable the user to perform programming may be used.

[8. Configuration example of the information processing apparatus]

As an example of an apparatus that performs various kinds of processing such as the Ising decode explained above, the information processing apparatus 100 is illustrated in FIG. 17. For example, the Ising decoders such as the Ising decoders 7 and 55 and the combination optimization accelerator 50 may be realized by the information processing apparatus 100. The information processing apparatus 100 is an apparatus (a computer) that performs Ising decode processing. In the following explanation, a configuration of the information processing apparatus 100 is explained. FIG. 17 is a diagram illustrating a configuration example of the information processing apparatus of the present disclosure.

As illustrated in FIG. 17, the information processing apparatus 100 includes a communication unit 110, a storage unit 120, a control unit 130, an input unit 140, and a display unit 150.

The communication unit 110 is realized by, for example, an NIC or a communication circuit. The communication unit 110 is connected to a predetermined network (not illustrated) by wire or radio and transmits and receives information to and from the other information processing apparatus such as the apparatus (the optimization processing apparatus) including the combination optimization unit 54. The communication unit 110 may transmit and receive information to and from a user terminal (the terminal 51 or the like) used by the user.

The communication unit 110 receives various kinds of information. The communication unit 110 receives the various kinds of information from an external apparatus. The communication unit 110 receives a coefficient matrix of an Ising model from the apparatus (the optimization processing apparatus) including the combination optimization unit 54. For example, the communication unit 110 transmits a solution of a spin variable in a basis state derived by the control unit 130 to the apparatus (the optimization processing apparatus) including the combination optimization unit 54.

The storage unit 120 is realized by a semiconductor memory element such as a RAM (Random Access Memory) or a flash memory or a storage device such as a hard disk or an optical disk. The storage unit 120 according to the first embodiment stores various data and information concerning various functions (programs) used for information processing and the like. The storage unit 120 may store information concerning a function used for processing in the formulas explained above. Note that the storage unit 120 is not limited to the above and may store various kinds of information according to a purpose.

The control unit 130 is implemented by, for example, a CPU (Central Processing Unit), a GPU (Graphics Processing Unit), or the like executing a program (for example, an information processing program according to the present disclosure) stored inside the information processing apparatus 100 with a RAM (Random Access Memory) or the like as a work area. The control unit 130 is realized by an integrated circuit such as an ASIC (Application Specific Integrated Circuit) or an FPGA (Field Programmable Gate Array).

As illustrated in FIG. 17, the control unit 130 includes a first processing unit 131 and a second processing unit 132 and realizes or executes a function and action of information processing explained below. The control unit 130 including the first processing unit 131 and the second processing unit 132 derives a solution of the spin variable in the basis state by performing the Ising decode processing using the coefficient matrix of the Ising model received by the communication unit 110.

For example, the first processing unit 131 calculates an objective function (a QUBO format) of the combination optimization problem. For example, the first processing unit 131 is realized by a first processor such as a CPU or a GPU. Note that the first processing unit 131 may be realized by a first processing circuit that calculates an objective function (a QUBO format) of the combination optimization problem. As the first processing circuit, any circuit such as an FPGA or an ASIC can be adopted.

For example, the second processing unit 132 outputs a solution of the combination optimization problem. For example, the second processing unit 132 is realized by a second processor such as a CPU or a GPU. Note that the second processing unit 132 may be realized by a second processing circuit that outputs the solution of the combination optimization problem. As the second processing circuit, any circuit such as an FPGA or an ASIC can be adopted.

As explained above, the control unit 130 is configured by a plurality of processors including the first processor corresponding to the first processing unit 131 and the second processor corresponding to the second processing unit 132. Note that the first processor and the second processor may be integrated or the first processor and the second processor may be distributed and disposed in different apparatuses.

The first processing unit 131 performs Ising model QUBO conversion. The first processing unit 131 performs QUBO-decoding problem conversion. For example, the first processing unit 131 extracts second information in an Ising model format (for example, a coefficient matrix of an Ising model) from first information concerning the combination optimization problem. The first processing unit 131 calculates an objective function in a QUBO format using the second information in the Ising model format (for example, the coefficient matrix of the Ising model). The first processing unit 131 performs processing based on the processing, the algorithms, and the like described in "2-1-1. Ising model-QUBO conversion", "2-1-2. QUBO-decoding problem conversion", and the like explained above.

The second processing unit 132 performs BP decoding. For example, the second processing unit 132 determines a spin variable with the belief propagation method. The second processing unit 132 outputs the determined spin variable. The second processing unit 132 performs processing based on the processing, the algorithms, and the like described in "2-1-2-3. BP decoding", "2-1-2-4. BP decoding of a first example", "2-1-2-5. BP decoding of a second example", and the like explained above. That is, the second processing unit 132 processes, with a predetermined scheme, a predetermined decoding problem converted from the combination optimization problem.

Various kinds of operation are input to the input unit 140 from the user. The input unit 140 receives an input by the user. The input unit 140 may receive various kinds of operation from the user via a keyboard, a mouse, or a touch panel provided in the information processing apparatus 100. The input unit 140 receives, as an input, user's operation for the contents CT1 to CT4, which are presentation screens displayed by the display unit 150. For example, the input unit 140 receives selection of an optimization problem by the user. Furthermore, for example, the input unit 140 receives selection of a solver by the user.

The display unit 150 displays various kinds of information. The display unit 150 is a display device such as a liquid crystal display and displays various kinds of information. The display unit 150 displays the contents CT1 to CT4 and the like. The information processing apparatus 100 may include a content generation unit that generates the contents CT1 to CT4 and the like. The content generation unit generates information to be displayed on the display unit 150 such as the contents CT1 to CT4 and the like. The content generation unit generates the contents CT1 to CT4 and the like using various technologies such as Java (registered trademark) as appropriate. Note that the content generation unit may generate the contents CT1 to CT4 and the like based on a format of CSS, JavaScript (registered trademark), or HTML. For example, the content generation unit may generate the contents CT1 to CT4 and the like in various formats such as JPEG (Joint Photographic Experts Group), GIF (Graphics Interchange Format), and PNG (Portable Network Graphics). Note that, when an apparatus (for example, the terminal 51) other than the information processing apparatus 100 performs processing related to the UI, the information processing apparatus 100 may not include the input unit 140 and the display unit 150.

[9. Other configuration examples and the like]

The processing according to the embodiments explained above may be performed in various different forms (modifications) other than the embodiments.

[9-1-1. Modifications]

In the example explained above, the information processing apparatus 100 is explained as the apparatus that performs the Ising decode processing. However, the information processing apparatus 100 may perform processing other than the Ising decode processing. For example, the information processing apparatus 100 according to a modification explained below may be an apparatus that performs processing before performing the Ising decode processing or processing after performing the Ising decode processing. For example, the information processing apparatus 100 may function as the apparatus (the optimization processing apparatus) including the combination optimization unit 54 or the terminal 51. For example, the information processing apparatus 100 may be an apparatus functioning as the terminal 51, the apparatus (the optimization processing apparatus) including the combination optimization unit 54, and the Ising decoder 55.

In this case, for example, the information processing apparatus 100 communicates with the quantum idea type computer 56, the quantum annealer 57, or the gate type quantum computer 58 through the communication unit 110, which is a communication circuit (a second processing circuit) that communicates with a quantum computer or the like connected to the outside. For example, when a computer selected by the user is absent locally, the information processing apparatus 100 communicates with, for example, the quantum idea type computer 56, the quantum annealer 57, or the gate type quantum computer 58, which is a computer on the Cloud, through the communication unit 110. In this way, the information processing apparatus 100 may instruct, through the communication unit 110, which is the communication circuit (the second processing circuit), an external apparatus (for example, the quantum idea type computer 56, the quantum annealer 57, or the gate type quantum computer 58) such as a quantum computer on an external network to process the combination optimization problem.

In this case, for example, the information processing apparatus 100 includes a first processor that calculates an objective function (an Ising form) of the combination optimization problem and a second processor that outputs a solution of the combination optimization problem.

In this case, the storage unit 120 of the information processing apparatus 100 according to the modification stores, for example, processing processes for one or more combination optimization problems. For example, the storage unit 120 may be configured by a storage circuit. In the storage unit 120, for example, as in the combination optimization database 52, typical data conversion processes for various kinds of combination optimization are stored as a library. Specifically, in the storage unit 120, a function (or a class) for receiving, as inputs, data and a database used in individual applications including combination optimization and outputting a coefficient of an Ising model is stored in the combination optimization database 52.

For example, the first processing unit 131 of the information processing apparatus 100 according to the modification is the first processor and calculates an objective function of a combination optimization problem ((an objective function of) an Ising form). The first processing unit 131 may be a first processing circuit that calculates an objective function of a combination optimization problem ((an objective function of) an Ising form). For example, the first processing unit 131 performs processing corresponding to the processing of the combination optimization unit 54. The first processing unit 131 refers to the library stored in the storage unit 120 and calculates an objective function corresponding to a designated combination optimization problem ((an objective function of) an Ising form). This objective function is expressed as an energy function of an Ising model.

The first processing unit 131 is one processor of at least two processors and extracts the second information from the input first information based on data and a database determined according to a type of a combination optimization problem. For example, the first processing unit 131 extracts, from the first information indicating selection of a combination optimization problem by the user, according to the type of the combination optimization problem, as the second information, a coefficient matrix of an objective function of an Ising form derived with reference to the library. The first processing unit 131 extracts, among information concerning a data conversion process for each type of a combination optimization problem stored in the storage unit 120, from the storage unit 120, information concerning a data conversion process corresponding to the combination optimization problem selected by the user. Then, the first processing unit 131 derives a coefficient matrix of the objective function in the Ising form by converting the combination optimization problem selected by the user using the information concerning the data transformation process extracted from the storage unit 120 to thereby extract, as the second information, a coefficient matrix of the objective function in the Ising form corresponding to the combination optimization problem selected by the user. Note that the above description is merely an example. The first processing unit 131 according to the modification may calculate an objective function of the combination optimization problem ((an objective function of) the Ising form) with various methods.

For example, the second processing unit 132 of the information processing apparatus 100 according to the modification is the second processor and outputs a solution of a combination optimization problem. The second processing unit 132 may be a second processing circuit that outputs a solution of the combination optimization problem. For example, the second processing unit 132 executes the Ising decoder processing explained above and outputs a solution of the combination optimization problem. For example, the second processing unit 132 calculates an objective function in a QUBO format based on an operation determined according to a combination optimization problem from the second information, which is the coefficient matrix of the Ising model. That is, this objective function is expressed as an energy function of the Ising model. The objective function is expressed as an objective function in the QUBO format.

For example, the display unit 150 of the information processing apparatus 100 according to the modification generates, based on a result output from the second processing unit 132, information requested by the system and displays at least a part the information. For example, the display unit 150 may be configured by a display circuit. The display unit 150 may include a circuit (a display circuit) for displaying information.

[9-1-2. Bit flip]

In the present invention, belief propagation decoding is a central part of calculation. This is because the belief propagation decoding is known to have very good performance. However, the belief propagation decoding is also relatively heavy processing. It is sometimes desired to reduce the weight of calculation when a variable size is increased.

A method called bit flip is known as such weight reduction. In this method, for example, a difference in energy between when a bit is inverted and when the bit is not inverted is used to determine whether to invert the bit at a probability corresponding to the difference.

Since a probabilistic process is present in the method, the method is inferior in reproducibility than a method implemented in a deterministic process in which belief propagation decoding is used. However, since it is unnecessary to keep a large amount of memory, the method is excellent in terms of weight reduction.

Decoding using bit flip is worse in performance than the belief propagation decoding and is not often used in practice. However, in recent years, various methods such as bit flip (GDBF) based on a gradient using a neural network and noisy gradient base bit flip (NGDBF) probabilistic gradient base bit flip to which noise is further added have been devised and performance has been improved. Therefore, it is also conceivable that bit flip that is lighter compared with the belief propagation and has comparable performance.

The present invention also includes a modification using such a bit flip instead of the belief propagation decoding. Note that bit flip is disclosed in, for example, the following document.

·Gradient Descent Bit Flipping Algorithms for Decoding LDPC Codes, Tadashi Wadayama et al. <https://arxiv.org/abs/0711.0261> •Noisy Gradient Descent Bit-Flip Decoding for LDPC Codes, Gopalakrishnan Sundararajan et al. <https://arxiv.org/abs/1402.2773>

[9-2-1. Processor]

Note that the processor referred to in the present disclosure is a concept including the following. An Ising decoder, a QUBO decoder, or a communication processor is also one of the plurality of processors configuring the system. Each of the plurality of processors may be a so-called system on chip (SOC) or a multi-core processor. A part of the plurality of core processors may be a digital signal processor (DSP) suitable for image processing or audio processing, a so-called neural network accelerator suitable for calculation such as a neural network, or a neuromorphic accelerator. A part of the plurality of core processors may be an accelerator including a dedicated processing circuit called Ising decoder or QUBO decoder of the present invention.

[9-2-2. Specific example of a multiprocessor]

A marked feature of the Ising decoder compared with the quantum annealing is that a solution (combination of spins) is deterministically obtained because a probabilistic process is not used. That is, even if the Ising decoder is converted into multiple processes and the same problem is input to the multiple processes, solutions are the same.

However, the Ising decoder has several unknown parameters (explained below) that contribute to performance. It is known from a simple experiment that the parameters strongly affect a final solution.

Therefore, a plurality of Ising decoders, in which the parameters are set to various different values in advance, re prepared as multiprocessors. Then, these Ising decoders execute given problems simultaneously in parallel. Then, since values different from one another appear, a best solution can be selected.

Here, the best solution is simply a solution that minimizes the energy function of the Ising model. Evaluation can also be performed from a coding viewpoint and, for example, a solution in which the number parities of 1 is small, that is, the number of parities not satisfying a parity constraint is small among checked parities may be selected. Consequently, it is possible to avoid deterioration in performance when parameter setting is inappropriate.

Note that a first example of these parameters uses a deviation value of a pseudo signal at the time of log-odds production. When a pseudo signal generated from a QUBO coefficient is input at the belief propagation decoding time, this parameter is used as a standard deviation parameter for the pseudo signal and is given as ($\sigma$ in Formula 25). However, in the case of the present invention, there are two kinds of pseudo signal and values of statistical variances of the pseudo signals do not coincide with each other. For this reason, various choices are conceived, for example, which value is adjusted to which and whether to take an average of the values. Therefore, a scheme for parallelizing as many parameters as possible to search for a best parameter is conceivable.

A second example of the parameters is a degree of freedom of scaling at the time when a pseudo signal string is generated from the QUBO coefficient. This is conceivable as a scale parameter in the objective function of Math. 2 (although the scale parameter is not described in Math. 2, $\eta$ at the time when the entire right side is multiplied by $\eta$ is the scale parameter.).

Usually, in an optimization problem, even if a scale of an objective function is changed, a solution is not changed unless a sign is changed. However, in the case of the present invention, when a scale of an objective function is increased, a scale of a pseudo signal string is increased accordingly and, as a result, a large difference due to a scale parameter occurs when a square error is calculated by taking the difference from a binary code.

Therefore, it is necessary to appropriately adjust a value of scaling. However, as in the first example, since there are two kinds of pseudo signals, a plurality of criteria are present about how to adjust the value of the scaling. That is, whether the value of the scaling is adjusted to the first pseudo signal string, adjusted to the second pseudo signal string, or adjusted to just right parts of both of the first pseudo signal string and the second pseudo signal string. Therefore, a scheme for parallelizing the parameters as many as possible and searching for a best parameter is conceivable.

The same operation may be performed by the plurality of processors in which the first and second parameters are simultaneously changed.

[9-3. Others]

Among the kinds of processing explained in the embodiments explained above, all or a part of the processing explained as being automatically performed can be manually performed or all or a part of the processing explained as being manually performed can be automatically performed by a publicly-known method. Besides, the processing procedure, the specific names, and the information including the various data and parameters explained in the document and illustrated in the drawings can be optionally changed except when specifically noted otherwise. For example, the various kinds of information illustrated in the figures are not limited to the illustrated information.

The illustrated components of the devices are functionally conceptual and are not always required to be physically configured as illustrated in the figures. That is, specific forms of distribution and integration of the devices are not limited to the illustrated forms and all or a part thereof can be configured by being functionally or physically distributed and integrated in any unit according to various loads, usage situations, and the like.

The embodiments and the modifications explained above can be combined as appropriate in a range in which the processing contents are not contradictory.

The effects described in the present specification are merely illustrations and are not limited and other effects may be present.

[10. Effects according to the present disclosure]

As described above, the information processing apparatus 100 is configured to convert a search for a basis state of a combination of spin variables of an Ising model into a binary quadratic optimization problem (QUBO), further convert the optimization problem into a decoding problem of a binary code, obtain a decoded bit string using an algorithm for solving the decoding problem, and convert the obtained decoded bit string to obtain a combination of spin variables.

A parity check matrix is a pseudo parity check matrix configured from the structure of a coefficient matrix of the QUBO and a signal string is a pseudo signal string calculated from the coefficient matrix of QUBO. The algorithm for solving the decoding problem is, for example, a decoding algorithm based on a belief propagation method used for decoding a low density parity-check code (LDPC).

In this decoding algorithm, a quadratic form is characterized in that conversion for changing the coefficient matrix to a symmetric matrix is applied. In this decoding algorithm, the pseudo parity check matrix is generated from the structure of an upper triangle or lower triangle matrix of the coefficient matrix. In this decoding algorithm, the pseudo parity check matrix is generated from elements corresponding to non-zero components of the coefficient matrix.

In order to reduce the weight of this decoding algorithm, the pseudo signal string is configured by a portion corresponding to the original bit string and a portion corresponding to a combination of two bits and is processed in order by different methods in a repetition unit of the decoding algorithm.

With the above configuration, the search problem of the basis state of the spin variable of the Ising model realized by quantum annealing or the like can be replaced with processing using an existing decoding algorithm used for decoding the low-density parity check matrix.

The decoding algorithm of the belief propagation method used as the existing decoding algorithm can be brought close to maximum likelihood decoding that is considered theoretically the best when a code length is large. That is, a basis state of an Ising model corresponding to the global minimum of optimization can be realized.

Further, the decoding algorithm by the belief propagation method can be realized by high-speed and light weight processing using an existing computer. Therefore, the basis state of the Ising model can be searched without using a large-scale system required for the quantum annealing.

If this method is used, a combination optimization problem can be solved at high speed using an existing semiconductor circuit rather than the quantum annealing. Therefore, an application including combination optimization can be operated in a small terminal (for example, a portable terminal such as a personal computer or a smartphone) or the like. For example, a high-precision algorithm can be implemented in the small terminal by a communication path encoding/decoding application, a compression sensing application, or the like. Alternatively, the method may be used for a route search application, an information search application, a scheduling application, a layout application for a memory or wiring, and the like, which are typical examples in which the combination optimization problem is included. In some cases, it is also possible to realize a high-speed application of combination optimization that occurs in daily life. An integrated development environment of these applications, an application for supporting a graphic user interface, and the like are also conceivable.

As described above, an information processing apparatus according to the present disclosure includes at least two processors that extract, from first information input to a system, second information necessary for processing formulated as a combination optimization problem, input the extracted second information, calculate an objective function of the combination optimization problem, input the objective function, and output a solution of the combination optimization problem. One of the at least two processors is a processor that outputs a solution of the combination optimization problem. Consequently, the information processing apparatus can make it possible to search for a spin basis state of an Ising model without using the quantum annealing. For example, the first information is a signal string, observation data and a code matrix, an observation dictionary matrix, or the like. For example, the second information is a coefficient of an energy function of the Ising model, a loss function of the QUBO, or the like. The above two processors are, for example, a processor functioning as a problem generation unit that generates a coefficient from data and a processor functioning as a problem solving unit that calculates a solution from the coefficient.

[11. Hardware configuration]

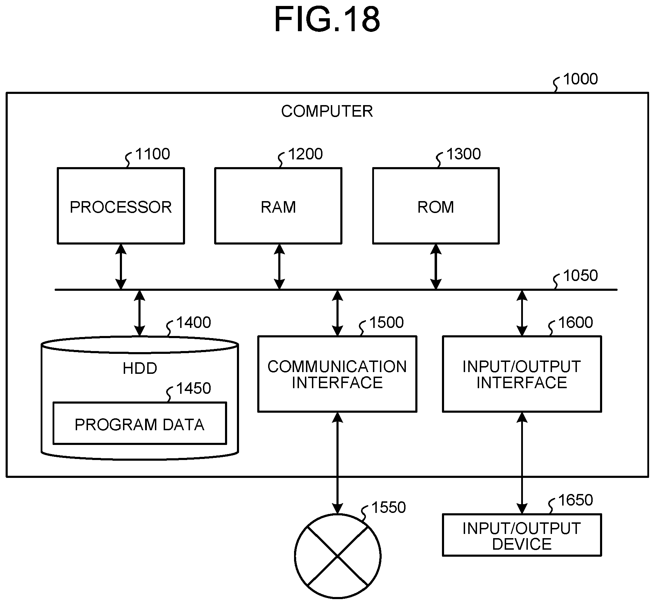

The computers such as the information processing apparatus 100 and the terminal 51 according to the embodiments and the modifications explained above are realized by, for example, a computer 1000 having a configuration illustrated in FIG. 18. FIG. 18 is a hardware configuration diagram illustrating an example of a computer that implements functions of an information processing apparatus and the like. In the following explanation, the information processing apparatus 100 is explained as an example. The computer 1000 includes a processor 1100, a RAM 1200, a ROM (Read Only Memory) 1300, an HDD (Hard Disk Drive) 1400, a communication interface 1500, and an input/output interface 1600. The units of the computer 1000 are connected by a bus 1050.

The processor 1100 operates based on a program stored in the ROM 1300 or the HDD 1400 and controls the units. For example, the processor 1100 loads programs stored in the ROM 1300 or the HDD 1400 in the RAM 1200 and executes processing corresponding to various programs. For example, the processor 1100 may be any processor such as a CPU or a GPU.

The computer 1000 may include a plurality of processors 1100. For example, the computer 1000 includes a

EP 4 235 526 A1

first processor (for example, at least one processor among the plurality of processors 1100) that extracts, from first information input to the system, second information necessary for processing formulated as a combination optimization problem, inputs the extracted second information, and calculates an objective function of the combination optimization problem. For example, the computer 1000 includes a second processor (for example, at least one processor among the plurality of processors 1100) that extracts, from first information input to the system, second information necessary for processing formulated as a combination optimization problem, inputs the extracted second information, inputs an objective function, and outputs a solution of the combination optimization problem. In this case, the computer 1000 includes a plurality of processors 1100 including at least a first processor and a second processor.

The ROM 1300 stores a boot program such as a BIOS (Basic Input Output System) to be executed by the processor 1100 when the computer 1000 is started, a program depending on hardware of the computer 1000, and the like.

The HDD 1400 is a computer-readable recording medium that non-transiently records programs to be executed by the processor 1100, data used by such a program, and the like. Specifically, the HDD 1400 is a recording medium that records an information processing program such as the information processing program according to the present disclosure that is an example of program data 1450.

The communication interface 1500 is an interface for the computer 1000 to be connected to an external network 1550 (for example, the Internet). For example, the processor 1100 receives data from other equipment or transmits data generated by the processor 1100 to other equipment via the communication interface 1500.

The input/output interface 1600 is an interface for connecting an input/output device 1650 and the computer 1000. For example, the processor 1100 receives data from an input device such as a keyboard or a mouse via the input/output interface 1600. The processor 1100 transmits data to an output device such as a display, a speaker, or a printer via the input/output interface 1600. The input/output interface 1600 may function as a media interface that reads a program or the like recorded in a predetermined recording medium (a medium). The medium is, for example, an optical recording medium such as a DVD (Digital Versatile Disc) or a PD (Phase change rewritable Disk), a magneto-optical recording medium such as an MO (Magneto-Optical disk), a tape medium, a magnetic recording medium, or a semiconductor memory.

For example, when the computer 1000 functions as the information processing apparatus 100, the processor 1100 of the computer 1000 implements the functions of the control unit 130 and the like by executing an information processing program such as the information processing program loaded on the RAM 1200. In the HDD 1400, an information processing program such as an information processing program according to the present disclosure and data in the storage unit 120 are stored. Note that the processor 1100 reads the program data 1450 from the HDD 1400 and executes the program data. However, as another example, the processor 1100 may acquire these programs from another device via the external network 1550.

Note that the present technique can also take the following configurations.

(1) An information processing apparatus comprising

at least two processors that extract, from first information input to a system, second information necessary for processing formulated as a combination optimization problem, receive an input of the extracted second information and calculate an objective function of the combination optimization problem, and receive an input of the objective function and output a solution of the combination optimization problem, wherein one processor of the at least two processors is a processor that outputs the solution of the combination optimization problem.

(2) The information processing apparatus according to (1), wherein one processor of the at least two processors extracts the second information from the input first information based on data corresponding to a type of the combination optimization problem.
(3) The information processing apparatus according to (1), wherein the processor that outputs the solution of the combination optimization problem calculates the objective function of the combination optimization problem based on an operation determined according to the combination optimization problem from the input second information.
(4) The information processing apparatus according to (1), wherein the processor that outputs the solution of the combination optimization problem executes processing including:

conversion processing for converting the input objective function into an input signal string of a decoding problem of a code equivalent to the combination optimization problem;
decoding processing for processing a decoding problem based on the input signal string to obtain a code string; and
output processing for converting the code string into the solution of the combination optimization problem and outputting the solution.

(5) The information processing apparatus according to (4), wherein

the decoding problem of the code is a parityconstrained maximum likelihood decoding problem using a parity check matrix, and
the conversion processing includes processing for configuring the parity check matrix from a coefficient of the objective function or processing of reading a parity check matrix that is already configured.

(6) The information processing apparatus according to (5), wherein

the decoding processing is configured by a decoding algorithm by a belief propagation method, and
the decoding processing decodes the code string from the input signal string and the parity check matrix based on decoding processing by the belief propagation method.

(7) The information processing apparatus according to (6), wherein
the decoding processing by the belief propagation method is decoding processing for a low density parity-check code.
(8) The information processing apparatus according to any one of (1) to (7), wherein
the objective function of the combination optimization problem is expressed as an energy function of an Ising model.
(9) The information processing apparatus according to any one of (1) to (8), wherein
the objective function of the combination optimization problem is expressed as an objective function of a QUBO (Quadratic Unconstrained Binary Optimization) format.
(10) The information processing apparatus according to (9), wherein
the at least one processor of the two processors executes processing for converting a coefficient of an energy function of an Ising model into a coefficient of the objective function of the QUBO format.
(11) An information processing apparatus comprising:

a storage circuit that stores processing processes of one or more combination optimization problems;
a first processing circuit that selects one processing process from the processing processes of the one or more combination optimization problems;
a second processing circuit that extracts, from information input to a system, data to be input to the processing process and outputs a result of the combination optimization problem; and
a display circuit that generates, based on the output result, information required by the system and displays at least a part of the information.

(12) The information processing apparatus according to (11), wherein
the second processing circuit processes, with a predetermined scheme, a predetermined decoding problem converted from the received combination optimization problem.
(13) The information processing apparatus according to (11), wherein
the second processing circuit is a communication circuit that communicates with a quantum computer connected to an outside.
(14) An information processing method comprising:

extracting, from first information input to a system, second information necessary for processing formulated as a combination optimization problem;
receiving an input of the extracted second information and calculating an objective function of the combination optimization problem; and
receiving an input of the objective function and outputting a solution of the combination optimization problem.

(15) An information processing system comprising

at least two processors that extract, from first information input to a system, second information necessary for processing formulated as a combination optimization problem, receive an input of the extracted second information and calculate an objective function of the combination optimization problem, and
receive an input of the objective function and output a solution of the combination optimization problem, wherein one processor of the at least two processors is a processor that outputs the solution of the combination optimization problem.

Reference Signs List

1 INFORMATION PROCESSING SYSTEM
2 DATABASE
3 APPLICATION CPU
4 COMBINATION OPTIMIZATION MEMORY
5 COMBINATION OPTIMIZATION PROCESSING CPU
6 ISING MODEL MEMORY
7 ISING DECODER
8 DECODING PROCESSING MEMORY
10 COMBINATION OPTIMIZATION CONVERSION UNIT
100 INFORMATION PROCESSING APPARATUS
110 COMMUNICATION UNIT
120 STORAGE UNIT
130 CONTROL UNIT
131 FIRST PROCESSING UNIT
132 SECOND PROCESSING UNIT
140 INPUT UNIT
150 DISPLAY UNIT
57 QUANTUM ANNEALER
571 COMMUNICATION UNIT
572 STORAGE UNIT
573 QUANTUM DEVICE UNIT
574 CONTROL UNIT
575 ACQUISITION UNIT
576 CALCULATION UNIT
577 TRANSMISSION UNIT

**Claims**

1. An information processing apparatus comprising

   at least two processors that extract, from first information input to a system, second information necessary for processing formulated as a combination optimization problem, receive an input of the extracted second information and calculate an objective function of the combination optimization problem, and
   receive an input of the objective function and output a solution of the combination optimization problem, wherein
   one processor of the at least two processors is a processor that outputs the solution of the combination optimization problem.

2. The information processing apparatus according to claim 1, wherein
   one processor of the at least two processors extracts the second information from the input first information based on data corresponding to a type of the combination optimization problem.

3. The information processing apparatus according to claim 1, wherein
   the processor that outputs the solution of the combination optimization problem calculates the objective function of the combination optimization problem based on an operation determined according to the combination optimization problem from the input second information.

4. The information processing apparatus according to claim 1, wherein
   the processor that outputs the solution of the combination optimization problem executes processing including:

   conversion processing for converting the input objective function into an input signal string of a decoding problem of a code equivalent to the combination optimization problem;
   decoding processing for processing a decoding problem based on the input signal string to obtain a code string; and

output processing for converting the code string into the solution of the combination optimization problem and outputting the solution.

5. The information processing apparatus according to claim 4, wherein

the decoding problem of the code is a parityconstrained maximum likelihood decoding problem using a parity check matrix, and
the conversion processing includes processing for configuring the parity check matrix from a coefficient of the objective function or processing of reading a parity check matrix that is already configured.

6. The information processing apparatus according to claim 5, wherein

the decoding processing is configured by a decoding algorithm by a belief propagation method, and
the decoding processing decodes the code string from the input signal string and the parity check matrix based on decoding processing by the belief propagation method.

7. The information processing apparatus according to claim 6, wherein
the decoding processing by the belief propagation method is decoding processing for a low density parity-check code.

8. The information processing apparatus according to claim 1, wherein
the objective function of the combination optimization problem is expressed as an energy function of an Ising model.

9. The information processing apparatus according to claim 1, wherein
the objective function of the combination optimization problem is expressed as an objective function of a QUBO (Quadratic Unconstrained Binary Optimization) format.

10. The information processing apparatus according to claim 9, wherein
the at least one processor of the two processors executes processing for converting a coefficient of an energy function of an Ising model into a coefficient of the objective function of the QUBO format.

11. An information processing apparatus comprising:

a storage circuit that stores processing processes of one or more combination optimization problems;
a first processing circuit that selects one processing process from the processing processes of the one or more combination optimization problems;
a second processing circuit that extracts, from information input to a system, data to be input to the processing process and outputs a result of the combination optimization problem; and
a display circuit that generates, based on the output result, information required by the system and displays at least a part of the information.

12. The information processing apparatus according to claim 11, wherein
the second processing circuit processes, with a predetermined scheme, a predetermined decoding problem converted from the received combination optimization problem.

13. The information processing apparatus according to claim 11, wherein
the second processing circuit is a communication circuit that communicates with a quantum computer connected to an outside.

14. An information processing method comprising:

extracting, from first information input to a system, second information necessary for processing formulated as a combination optimization problem;
receiving an input of the extracted second information and calculating an objective function of the combination optimization problem; and
receiving an input of the objective function and outputting a solution of the combination optimization problem.

15. An information processing system comprising

at least two processors that extract, from first information input to a system, second information necessary for processing formulated as a combination optimization problem, receive an input of the extracted second information and calculate an objective function of the combination optimization problem, and

receive an input of the objective function and output a solution of the combination optimization problem, wherein one processor of the at least two processors is a processor that outputs the solution of the combination optimization problem.

# FIG.1

```
┌─────────────────┐
│      START      │
└─────────────────┘
         │
         ▼                           S1
┌─────────────────────────────┐
│ INPUT COEFFICIENT MATRICES  │
│          J AND h            │
└─────────────────────────────┘
         │
         ▼                           S2
┌─────────────────────────────┐
│      CONVERT ISING          │
│      MODEL to QUBO          │
└─────────────────────────────┘
         │
         ▼                           S3
┌─────────────────────────────┐
│  CONVERT QUBO to DECODING   │
│          PROBLEM            │
└─────────────────────────────┘
         │
         ▼                           S4
┌─────────────────────────────┐
│        BP DECODING          │
└─────────────────────────────┘
         │
         ▼                           S5
┌─────────────────────────────┐
│  DETERMINE SPIN VARIABLE    │
└─────────────────────────────┘
         │
         ▼                           S6
┌─────────────────────────────┐
│   OUTPUT SPIN VARIABLE s    │
└─────────────────────────────┘
         │
         ▼
┌─────────────────┐
│       END       │
└─────────────────┘
```

CO-EFFICIENT MATRIX : $q_{ij} = -4J_{ij} + \left( 4\sum_{k=1}^{N} J_{ik} + 2h_i \right)\delta_{ij}$

BINARY VARIABLE CONVERSION : $z_i = (1 - s_i)/2$

SIGNAL STRING : $r = [r_1, r_2 \dots r_N, r_{11}, r_{12} \dots r_{NN}]^T$

CODE STRING : $x = [z_1, z_2 \dots z_N, z_{11}, z_{12} \dots z_{NN}]^T$

$$r_i = \frac{1}{2}\left( 1 - 2\sum_{j=1}^{N} q_{ij} \right), r_{ij} = \frac{1}{2}(1 + q_{ij})$$

PARITY CHECK MATRIX:H

COMBINA-TION VARIABLE : $s^* = \frac{1}{2}(1 - [x_1^*, x_2^* \dots x_N^*]^T)$

# FIG.2

```
                    ┌──────────────┐
                    │    START     │
                    └──────┬───────┘
                           │        ⌐S11
              ┌────────────▼──────────────┐
              │  INPUT QUBO COEFFICIENT    │
              └────────────┬──────────────┘
                         Q │
                           ├──────────────────────────────┐
                           │      ⌐S12                      │      ⌐S13
              ┌────────────▼──────────────┐   ┌────────────▼──────────────┐
              │  GENERATE FIRST SIGNAL     │   │  GENERATE SECOND SIGNAL    │
              │         STRING             │   │         STRING             │
              └────────────┬──────────────┘   └────────────┬──────────────┘
                      r₁   │◄────────────────────────────────── r₂
                           │      ⌐S14
              ┌────────────▼──────────────┐
              │   SEQUENCE CONNECTION      │
              └────────────┬──────────────┘
                      r    │      ⌐S15
              ┌────────────▼──────────────┐
              │   OUTPUT SIGNAL SEQUENCE   │
              └────────────┬──────────────┘
                           │
                    ┌──────▼───────┐
                    │     END      │
                    └──────────────┘
```

# FIG.3

```
        ┌─────────────┐
        │    START    │
        └──────┬──────┘
               │
               ▼
   ┌───────────────────────┐
   │      INPUT SIZE       │ ～S21
   └───────────┬───────────┘
               │ N
               ▼
   ┌───────────────────────┐
   │  SECURE PARITY CHECK  │ ～S22
   │     MATRIX MEMORY     │
   └───────────┬───────────┘
               │ $H_c$
               ▼
   ┌───────────────────────┐
   │ SUBSTITUTE PARITY CHECK│ ～S23
   │      MATRIX VALUE      │
   └───────────┬───────────┘
               │ $H_c$
               ▼
   ┌───────────────────────┐
   │OUTPUT PARITY CHECK MATRIX│ ～S24
   │         CORE          │
   └───────────┬───────────┘
               │
               ▼
        ┌─────────────┐
        │     END     │
        └─────────────┘
```

# FIG.4

```
                    ┌──────────────┐
                    │    START     │
                    └──────┬───────┘
        S31                │
        ┌──────────────────▼───────────────┐
        │          INPUT SIGNAL            │
        └──────────────────┬───────────────┘
        S32                │ r
        ┌──────────────────▼───────────────┐
        │       CALCULATE LOG-ODDS         │
        └──────────────────┬───────────────┘
                           │ o                      b
        S33                │                               S34
   H →   ┌────────────────▼──────────────┐       ┌────────────────────────┐
         │      VARIABLE NODE            │   H →  │     CHECK NODE         │
         │      PROCESSING               │       │     PROCESSING         │
         └────────────────┬──────────────┘       └────────────────────────┘
                          │ o,a                       a
        S35               │
        ┌─────────────────▼─────────────┐
        │       EXTRACT BIT STRING      │
        └─────────────────┬─────────────┘
        S36               │ z
        ┌─────────────────▼─────────────┐
        │       OUTPUT BIT STRING       │
        └─────────────────┬─────────────┘
                          │
                    ┌─────▼────────┐
                    │     END      │
                    └──────────────┘
```

# FIG.5

EP 4 235 526 A1

```
              ┌──────────────┐
              │    START     │
              └──────┬───────┘
                     │
   S41               ▼
  ┌──────────────────────────────┐
  │   SIGNAL INPUT (r1, r2)       │
  └──────────────┬────────────────┘
                 │
            r1   ├──────────────────────────────────────────┐
                 │                                           │ r2
   S42           ▼                                    S44    ▼
  ┌──────────────────────┐                          ┌──────────────────────┐
  │  CALCULATE LOG-ODDS   │                          │  CALCULATE LOG-ODDS   │
  └──────────┬────────────┘          b1        b2    └──────────┬────────────┘
   S43   o1  ▼                                    S46      o2   ▼   S45
  ┌──────────────────────┐    ┌──────────────────────┐  ┌──────────────────────┐
Hc→│  VARIABLE NODE       │    │   CHECK NODE         │  │  VARIABLE NODE        │
  │  PROCESSING #1        │    │   PROCESSING X       │  │  PROCESSING #2        │
  └──────────┬────────────┘    └──────────────────────┘  └──────────────────────┘
   S47  o1,a1▼         a1                            a2
  ┌──────────────────────┐
  │  EXTRACT BIT STRING   │
  └──────────┬────────────┘
   S48    z1 ▼
  ┌──────────────────────┐
  │  OUTPUT BIT STRING    │
  └──────────┬────────────┘
             ▼
     ┌──────────────┐
     │     END      │
     └──────────────┘
```

# FIG.6

# FIG.7

# FIG.8

# FIG.9

1B

31

SENSOR
CONTROL UNIT

CONTROL
SIGNAL

32

MEASUREMENT
TARGET → SENSING UNIT → DATA

# FIG.10

MEASUREMENT TARGET → SENSOR (41) → SPARSE MODEL PROCESSING UNIT (43) → INFORMATION RESTORATION UNIT (44) → RESTORATION INFORMATION

OBSERVATION MATRIX DICTIONARY MATRIX (42)

COMBINATION OPTIMIZATION ACCELERATOR (50)

1B

# FIG.11

EP 4 235 526 A1

# FIG.12

57

QUANTUM ANNEALER

571

COMMUNICATION
UNIT

574

CONTROL UNIT

575 ACQUISITION
UNIT

576 CALCULATION
UNIT

577

TRANSMISSION
UNIT

572

STORAGE UNIT

573

QUANTUM
DEVICE UNIT

# FIG.13

CT1

COMBINATION OPTIMIZATION LIST THAT CAN BE
CONVERTED INTO ISING MODEL
☐ DIVISION OF INTEGER
☐ TRAVELING SALESMAN PROBLEM
☐ CHROMATIC PROBLEM
☑ MAXIMUM LIKELIHOOD DECODING
☐ IO MINIMIZATION SPARSE CODING
☐ FACTORIZATION
☐ SCHEDULING PROBLEM
☐ OPTIMUM DISTRIBUTION PROBLEM

# FIG.14

CT1

COMBINATION OPTIMIZATION LIST THAT CAN BE
CONVERTED INTO ISING MODEL
☐ DIVISION OF INTEGER
☐ TRAVELING SALESMAN PROBLEM
☐ CHROMATIC PROBLEM
☑ MAXIMUM LIKEL
☐ IO MINIMIZATION
☐ FACTORIZATION
☐ SCHEDULING PR
☐ OPTIMUM DISTR

CT2

EXPLANATION
- CONVERT MAXIMUM LIKELIHOOD DECODING OF BLOCK
CODE INTO ISING MODEL

NECESSARY DATA
- DATABASE: CODE GENERATION MATRIX OR PARITY
CHECK MATRIX

URL:

- DATA: RECEPTION SIGNAL VECTOR

URL:

# FIG.15

CT3

SOLVER SELECTION
☐ QUANTUM ANNEALER
☐ QUANTUM IDEA TYPE COMPUTER
☑ ISING DECODER
☐ GATE TYPE QUANTUM COMPUTER
☐ LINEAR PROGRAMMING SOLVER
☐ INTEGER PROGRAMMING SOLVER

| SOLVE | CANCRL |
|---|---|

# FIG.16

CT3

SOLVER SELECTION
☐ QUANTUM ANNEALER
☐ QUANTUM IDEA TYPE COMPUTER
☑ ISING DECODER
☐ GATE TYPE QUANTUM COMPUTER
☐ LINEAR PROGR
☐ INTEGER PROG

SOLVE

CT4

EXPLANATION
- SOLVE COMBINATION OPTIMIZATION PROBLEM WITH CODE DECODING ALGORITHM
- WHEN THERE ARE MANY VARIABLES, IT IS EASY TO REACH GLOBAL MINIMUM
- THIS PROBLEM CAN BE SOLVED WITH APPROXIMATELY X SECONDS AND MEMORY YKB

BACKEND
CHECK CPU
☑ GPU
☐ FPGA
☐ QUANTUM ANNEALER
☐ GATE TYPE QUANTUM COMPUTER

# FIG.17

INFORMATION PROCESSING APPARATUS 100

COMMUNICATION UNIT 110

CONTROL UNIT 130

FIRST PROCESSING UNIT 131

SECOND PROCESSING UNIT 132

STORAGE UNIT 120

INPUT UNIT 140

DISPLAY UNIT 150

# FIG.18

**INTERNATIONAL SEARCH REPORT**

| International application No. |
|---|
| **PCT/JP2021/041071** |

**A. CLASSIFICATION OF SUBJECT MATTER**

*G06N 99/00*(2019.01)i; *G06F 17/10*(2006.01)i
FI: G06N99/00 180; G06F17/10 Z

According to International Patent Classification (IPC) or to both national classification and IPC

**B. FIELDS SEARCHED**

Minimum documentation searched (classification system followed by classification symbols)

G06N99/00; G06F17/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-149664 A (NIPPON TELEGRAPH & TELEPHONE) 17 September 2020 (2020-09-17) | 1, 3, 8-10, 14, 15 |
| | paragraphs [0011]-[0115], fig. 1-14 | |
| Y | | 2, 11-13 |
| A | | 4-7 |
| Y | 左尾将隆ほか, 組合せ最適化問題を高速に解くデジタルアニーラの活用技術, FUJITSU, 01 July 2018, vol. 69, no. 4, pp. 77-83 | 2, 11-13 |
| | in particular, p. 79, (SAO, Masataka et al. Application of Digital Annealer for Faster Combinatorial Optimization.) | |
| A | | 1, 3-10, 14, 15 |
| A | US 2018/0246851 A1 (1QB INFORMATION TECHNOLOGIES INC.) 30 August 2018 (2018-08-30) | 1-15 |
| | entire text, all drawings | |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 January 2022** | **25 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT

Information on patent family members

International application No.

**PCT/JP2021/041071**

| Patent document cited in search report | | | Publication date (day/month/year) | Patent family member(s) | | | Publication date (day/month/year) |
|---|---|---|---|---|---|---|---|
| JP | 2020-149664 | A | 17 September 2020 | (Family: none) | | | |
| US | 2018/0246851 | A1 | 30 August 2018 | WO | 2018/119522 | A1 | |
| | | | | entire text, all drawings | | | |

Form PCT/ISA/210 (patent family annex) (January 2015)

# EP 4 235 526 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **NAOKI IDE ; TETSUYA ASAYAMA ; HIROSHI UENO ; MASAYUKI OHZEKI.** *Maximum Likelihood Channel Decoding with Quantum Annealing Machine,* 09 November 2020, https://arxiv.org/abs/2007.08689

- **TADASHI WADAYAMA et al.** *Gradient Descent Bit Flipping Algorithms for Decoding LDPC Codes, https://arxiv.org/abs/0711.0261*
- **GOPALAKRISHNAN SUNDARARAJAN et al.** *Noisy Gradient Descent Bit-Flip Decoding for LDPC Codes, https://arxiv.org/abs/1402.2773*